# EUROPEAN PATENT SPECIFICATION

(11) **EP 4 647 978 B1**
(45) Date of publication and mention of the grant of the patent: **09.09.2026**
(21) Application number: 25175058.4
(22) Date of filing: 08.05.2025
(51) Int. Cl.: G06N 10/70, G06N 10/20

(54) **COMPUTER PROGRAM, QUANTUM COMPUTATION CONTROL METHOD, AND INFORMATION PROCESSING APPARATUS**
COMPUTERPROGRAMM, QUANTENBERECHNUNGSSTEUERVERFAHREN UND INFORMATIONSVERARBEITUNGSVORRICHTUNG
PROGRAMME INFORMATIQUE, PROCÉDÉ DE COMMANDE DE CALCUL QUANTIQUE ET APPAREIL DE TRAITEMENT D'INFORMATIONS

(30) Priority: 10.05.2024 JP 2024077454
(43) Date of publication of application: 12.11.2025
(73) Proprietor: FUJITSU LIMITED, Kawasaki-shi, Kanagawa 211-8588 (JP)
(72) Inventor: TOSHIO, Riki, Kawasaki-shi, 211-8588 (JP)
(74) Representative: Haseltine Lake Kempner LLP

(56) References cited:
- Y. AKAHOSHI ET AL: "Partially fault-tolerant quantum computing architecture with error-corrected Clifford gates and space-time efficient analog rotations", ARXIV.ORG, CORNELL UNIVERSITY LIBRARY, 201 OLIN LIBRARY CORNELL UNIVERSITY ITHACA, NY 14853, 23 March 2023 (2023-03-23), XP091466791, DOI: 10.48550/arXiv.2303.13181
- H. CHOI ET AL: "Fault tolerant non-Clifford state preparation for arbitrary rotations", ARXIV.ORG, CORNELL UNIVERSITY LIBRARY, 201 OLIN LIBRARY CORNELL UNIVERSITY ITHACA, NY 14853, 30 March 2023 (2023-03-30), XP091471799, DOI: 10.48550/arXiv.2303.17380
- D. MCKAY ET AL: "Efficient Z gates for quantum computing", PHYSICAL REVIEW A, vol. 96, no. 2, 022330, 31 August 2017 (2017-08-31), XP055784554, DOI: 10.1103/PhysRevA.96.022330
- W. VAN DAM, R. WONG: "Two-qubit stabilizer circuits with recovery I: existence", ARXIV.ORG, CORNELL UNIVERSITY LIBRARY, 201 OLIN LIBRARY CORNELL UNIVERSITY ITHACA, NY 14853, 16 March 2018 (2018-03-16), XP080865152, DOI: 10.48550/arXiv.1803.06081

## Description

### FIELD

The embodiments discussed herein relate to a computer program, a quantum computation control method, and an information processing apparatus.

### BACKGROUND

In a quantum computer, quantum computations are executed according to a quantum circuit by performing gate operations on qubits. An individual qubit is the minimum unit of information used in computation and corresponds to a bit (a classical bit) in a classical computer. Unlike classical bits, each qubit is also able to take a superposition state of "0" and "1".

Qubit information may be destroyed (errors may occur) due to interactions with the environment, errors in gate operations, or others. Countermeasures against such errors include quantum error correction and quantum error mitigation.

The quantum error correction is a process of detecting the occurrence of an error and correcting the error by (redundantly) encoding quantum information using a plurality of qubits. Hereinafter, qubits that are not encoded are referred to as physical qubits, and a set of encoded qubits is referred to as a logical qubit. The quantum error mitigation is a process of advancing the computation with errors and mitigating the impacts of the errors by, for example, modifying the quantum circuit, extrapolating a measurement result, or others.

Quantum computers that perform quantum computations while performing the quantum error correction on logical qubits are called fault-tolerant quantum computers (FTQCs). FTQCs are able to perform various kinds of quantum computations by combining predetermined basic gates. The predetermined basic gates include the H gate, the CNOT gate, the S gate, and the T gate. The H gate, the CNOT gate, and the S gate are quantum gates for Clifford operations, and the T gate is a quantum gate for non-Clifford operations. A set of these basic gates is called Clifford+T.

Among these Clifford+T gates, the T gate uses a huge number of physical qubits for error correction. Therefore, an FTQC for performing useful computation needs a scale of about one million physical qubits.

As a technique for reducing the number of physical qubits used for error correction, for example, a high-efficiency phase rotation gate quantum computing architecture called a space-time efficient analog rotation quantum computing (STAR) architecture has been proposed. In the STAR architecture, an arbitrary rotation gate is implemented using a predetermined resource state (also referred to as an ancilla state) and a gate teleportation circuit. The resource state is represented by a redundant logical qubit. The process of preparing a resource state is referred to as a "state injection protocol" or a "state preparation protocol" (hereinafter, referred to as a "state preparation protocol").

In addition, a technique related to post-selection has been proposed to efficiently prepare a resource state for gate teleportation. This technique involves applying a Z rotation to physical qubits during a process of preparing a resource state. For Z rotations, a high-precision rotation technique using a virtual Z gate has been proposed.

See, for example, Yutaro Akahoshi, Kazunori Maruyama, Hirotaka Oshima, Shintaro Sato, and Keisuke Fujii, "Partially Fault-tolerant Quantum Computing Architecture with Error-corrected Clifford Gates and Space-time Efficient Analog Rotations," arXiv:2303.13181v1, 23 Mar 2023.

See also, for example, Hyeongrak Choi, Frederic T. Chong, Dirk Englund, Yongshan Ding, "Fault Tolerant Non-Clifford State Preparation for Arbitrary Rotations," arXiv:2303.17380v1, 30 Mar 2023.

See also, for example, David C. McKay, Christopher J. Wood, Sarah Sheldon, Jerry M. Chow, and Jay M. Gambetta, "Efficient Z gates for quantum computing," PHYSICAL REVIEW A, Vol.96, 022330 (2017), 31 August 2017.

In the state preparation protocol, if a control error (a deviation in a rotation angle) occurs in a rotation gate operation performed on a physical qubit used for generating a resource state, an error corresponding to the deviation occurs in the resource state accordingly. The error in the resource state then causes a reduction in the accuracy of the gate operation of a gate teleportation circuit using the resource state.

### SUMMARY

In one aspect, it is desirable to improve the accuracy of generating a resource state. The present invention is defined by the appended independent claims to which reference should now be made. Specific embodiments are defined in the dependent claims.

### BRIEF DESCRIPTION OF DRAWINGS

The invention is described, by way of example only, with reference to the following drawings, in which:
FIG. 1 illustrates an example of a quantum computation control method according to a first embodiment;
FIG. 2 illustrates an example of a system configuration according to a second embodiment;
FIG. 3 illustrates an example of hardware of a quantum computing system;
FIG. 4 illustrates the characteristics of a qubit;
FIG. 5 illustrates an example of quantum error correction;
FIG. 6 illustrates an example of basic gates used in fault-tolerant quantum computation;
FIG. 7 illustrates an example of a quantum circuit that performs a gate operation for an arbitrary rotation;
FIG. 8 illustrates an example of a state preparation protocol;
FIG. 9 illustrates examples of combination patterns of physical qubits that are used in the gate operation of a transversal rotation gate;
FIG. 10 illustrates an example of a transversal rotation gate that collectively rotates two or more physical qubits;
FIG. 11 illustrates an example of a transversal rotation gate that involves multi-Z rotations with a plurality of weights;
FIG. 12 illustrates an example of an error in a rotation operation at the physical level;
FIG. 13 illustrates an example of a control error that occurs despite using a virtual Z gate;
FIG. 14 illustrates an example of the gate operation of a transversal rotation gate in which inverse rotations are randomly applied in rotation directions;
FIG. 15 illustrates an example of a correction process for a state obtained by post-selection;
FIG. 16 illustrates an example in which inverse rotations randomly applied in rotation directions are implemented using a virtual Z gate;
FIG. 17 illustrates an example of a quantum circuit of a multi-Pauli Z rotation gate, implemented using a virtual Z gate;
FIG. 18 is a block diagram illustrating an example of functions for quantum computation in the quantum computing system;
FIG. 19 is a block diagram illustrating an example of functions of an arbitrary rotation execution unit;
FIG. 20 is a sequence diagram illustrating an example procedure for quantum circuit computation;
FIG. 21 is a flowchart illustrating an example procedure for quantum computation in a classical computer;
FIG. 22 is a flowchart illustrating an example procedure for quantum circuit execution;
FIG. 23 is a flowchart illustrating an example procedure for resource state generation;
FIG. 24 illustrates examples of rotation direction patterns in which rotation directions for individual physical qubits constituting a logical qubit are randomly inverted; and
FIG. 25 illustrates an example of a specific rotation direction pattern.

### DESCRIPTION OF EMBODIMENTS

Hereinafter, embodiments will be described with reference to the drawings. A plurality of embodiments may be combined unless they exclude each other.

### [First Embodiment]

The first embodiment provides a quantum computation control method for improving the accuracy of generating a resource state that is used by a gate teleportation circuit.

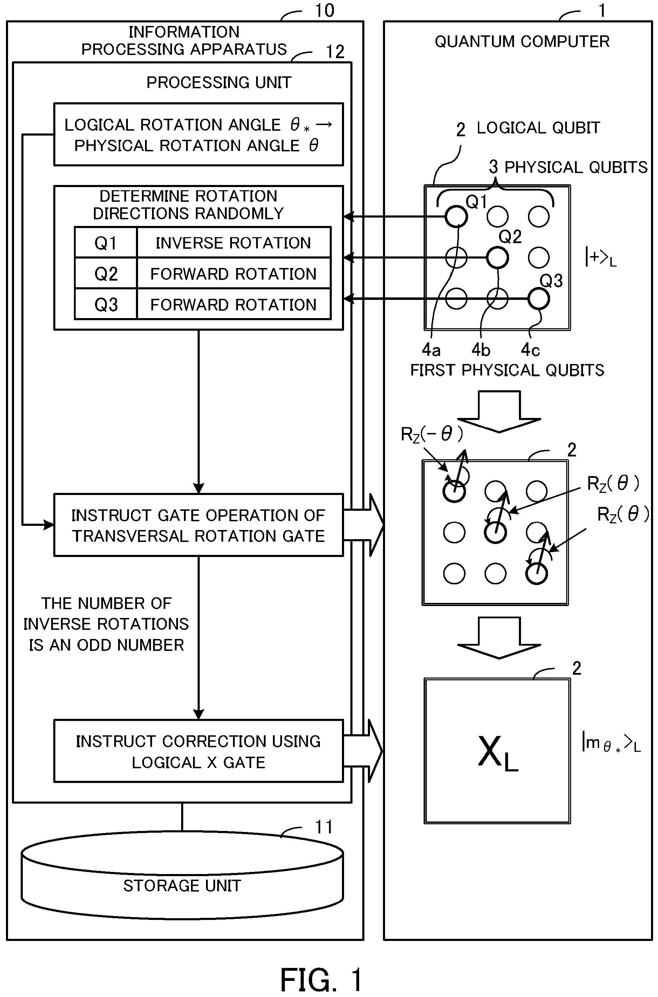

FIG. 1 illustrates an example of a quantum computation control method according to the first embodiment. FIG. 1 illustrates an information processing apparatus 10 that performs a quantum computation control method. For example, the information processing apparatus 10 is able to perform the quantum computation control method by executing a quantum computation control program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores, for example, a quantum computation control program. The storage unit 11 stores, for example, a quantum circuit representing an execution procedure of quantum gates that are executed by a quantum computer 1.

The processing unit 12 causes the quantum computer 1 to execute the quantum computations based on the quantum circuit. When causing the quantum computer 1 to execute a gate teleportation circuit, the processing unit 12 generates a resource state to be used by the gate teleportation circuit, using a logical qubit 2 in the quantum computer 1.

The gate teleportation circuit is a circuit that performs the logical gate operation of a rotation (phase rotation) around the Z axis on a logical qubit, not illustrated, using, for example, a resource state. The rotation angle of the rotation performed by the gate teleportation circuit is defined as a logical rotation angle θ_{*}.

The gate teleportation circuit uses a logical qubit in a resource state "|m_{θ*}〉_{L}" (* following θ is a subscript of θ, and the same applies hereinafter) in addition to a logical qubit serving as a gate operation target. The subscript L in the resource state "|m_{θ*}〉_{L}" indicates that the state is represented by a redundant logical qubit. Hereinafter, similarly, the subscript L is added to the states of logical qubits.

The processing unit 12 performs the following process in order to set the state of the logical qubit 2 to the resource state.

The processing unit 12 prepares a logical |+〉 state using the logical qubit 2 including a plurality of physical qubits 3 in the quantum computer 1. The processing unit 12 determines, based on the logical rotation angle θ_{*}, a physical rotation angle θ around a predetermined axis to be applied to at least a plurality of first physical qubits 4a, 4b, and 4c among the plurality of physical qubits 3 constituting the logical qubit 2. In the example of FIG. 1, the plurality of first physical qubits 4a, 4b, and 4c arranged on a diagonal line among the physical qubits arranged in a three-by-three lattice are rotation operation targets. A rotation gate that is simultaneously applied to the physical qubits arranged in this manner may be referred to as a transversal rotation gate.

The processing unit 12 randomly determines a rotation direction for each of the plurality of first physical qubits 4a, 4b, and 4c to be either a forward direction (the rotation direction of a rotation operation performed on an operation target logical qubit) or its reverse direction. In the example of FIG. 1, a rotation in the reverse direction (-θ) is determined for the first physical qubit 4a given a label "Q1", a rotation in the forward direction (θ) is determined for the first physical qubit 4b given a label "Q2", and a rotation in the forward direction (θ) is determined for the first physical qubit 4c given a label "Q3".

The processing unit 12 rotates each of the plurality of first physical qubits 4a, 4b, and 4c around the predetermined axis by the physical rotation angle θ in the determined rotation direction. For example, the processing unit 12 instructs the quantum computer 1 to perform the gate operation of a transversal rotation gate in which the plurality of first physical qubits 4a, 4b, and 4c are designated as operation targets. In response to the instruction, the quantum computer 1 performs the rotation gate operation of the physical rotation angle θ on each first physical qubit 4a, 4b, and 4c in the forward or reverse direction.

In the case where the number of first physical qubits rotated in the reverse direction is an even number, the state of the logical qubit 2 after being rotated around the predetermined axis by the physical rotation angle serves as the resource state. On the other hand, in the case where the number of first physical qubits rotated in the reverse direction is an odd number, the processing unit 12 applies a logical X operator for correcting the rotation direction to the logical qubit 2. For example, the processing unit 12 transmits, to the quantum computer 1, an instruction to correct the state of the logical qubit 2 by applying the logical X operator. In the case where the number of first physical qubits rotated in the reverse direction is an odd number, the state of the logical qubit 2 subjected to the logical gate operation for correcting the rotation direction serves as the resource state.

When the preparation of the resource state is complete, the processing unit 12 causes the quantum computer 1 to execute the gate teleportation circuit using the resource state prepared using the logical qubit 2. Thus, a logical gate operation using the gate teleportation circuit is performed in the quantum computer 1.

As described above, by introducing randomness into the determination of rotation directions for physical qubits at the time of executing the transversal rotation gate, the impacts of control errors occurring at the time of generating the resource state are significantly mitigated.

In the process of rotating the plurality of first physical qubits 4a, 4b, and 4c around the predetermined axis by the physical rotation angle, the processing unit 12 may use a virtual Z gate to change the states of the plurality of first physical qubits 4a, 4b, and 4c to states rotated around the Z axis by the physical rotation angle. The virtual Z gate is a process of virtually performing a phase rotation operation. The use of the virtual Z gate improves the accuracy of generating a resource state.

In the process of rotating around the predetermined axis by the physical rotation angle, the processing unit 12 may use a multi-Z rotation gate such as a two-qubit rotation gate or a three-qubit rotation gate. For example, the processing unit 12 causes the quantum computer 1 to perform the gate operation of an n-qubit rotation gate on n (n is an integer of 2 or more) first physical qubits. This reduces the error rate during execution of the transversal rotation gate and improves the accuracy of generating a resource state.

### [Second Embodiment]

The second embodiment provides a quantum computing system capable of generating a resource state with high accuracy using the state preparation protocol.

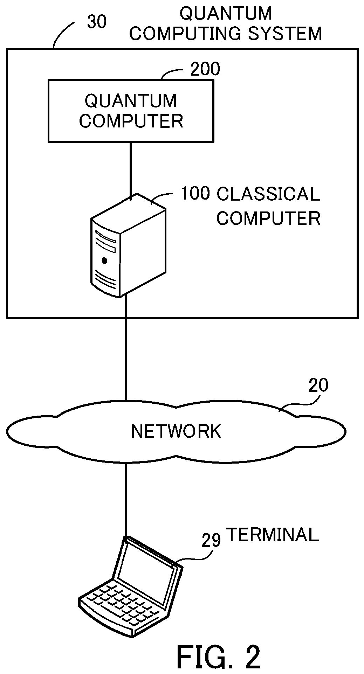

FIG. 2 illustrates an example of a system configuration according to the second embodiment. The quantum computing system 30 includes a classical computer 100 and a quantum computer 200. The classical computer 100 is a so-called von Neumann computer. The quantum computer 200 is a non-Neumann computer to which the principle of quantum mechanics is applied. The classical computer 100 is connected to a terminal 29 via a network 20. The terminal 29 is a von Neumann computer used by a user.

The user uses the terminal 29 to create a quantum circuit for solving a problem through quantum computation. The created quantum circuit is transmitted from the terminal 29 to the quantum computing system 30. In the quantum computing system 30, the classical computer 100 and the quantum computer 200 cooperate with each other to execute the quantum computation based on the received quantum circuit. Then, the quantum computing system 30 transmits the computation result to the terminal 29.

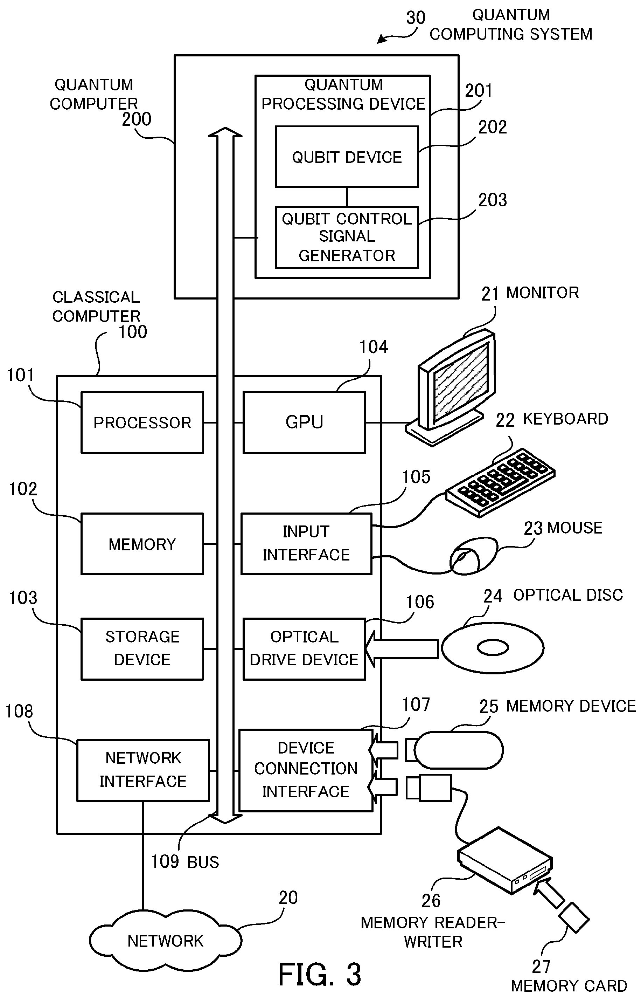

FIG. 3 illustrates an example of hardware of the quantum computing system. The classical computer 100 is entirely controlled by a processor 101. A memory 102 and a plurality of peripheral devices are connected to the processor 101 via a bus 109.

The classical computer 100 may be a multiprocessor system having a plurality of processors. A set of multiple processors in a multiprocessor system may be referred to as a processor 101. The processor 101 may be referred to as processor circuitry. Each of the plurality of processors is able to perform some or all of a plurality of processes performed by the classical computer 100. Two or more processes among a plurality of related processes may be performed by different processors.

The processor 101 is, for example, a central processing unit (CPU), a micro processing unit (MPU), or a digital signal processor (DSP). At least one of the functions implemented by the processor 101 executing programs may be implemented by an electronic circuit such as an application specific integrated circuit (ASIC) or a programmable logic device (PLD).

The memory 102 is used as a main memory device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor memory device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the classical computer 100. The storage device 103 stores the OS program, application programs, and various data. As the storage device 103, for example, a hard disk drive (HDD) or a solid state drive (SSD) may be used.

The GPU 104 is an arithmetic unit that performs image processing. The GPU 104 is an example of a graphic controller. A monitor 21 is connected to the GPU 104. The GPU 104 displays images on the screen of the monitor 21 in accordance with commands from the processor 101. Examples of the monitor 21 include an organic electro luminescence (EL) display device, a liquid crystal display device, and others.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a compact disc recordable (CD-R), compact disc rewritable (CD-RW), or the like.

The device connection interface 107 is a communication interface for connecting peripheral devices to the classical computer 100. For example, a memory device 25 and a memory reader-writer 26 may be connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected to a wired communication device such as a switch or a router via a cable. Further, the network interface 108 may be a wireless communication interface communicatively connected to a wireless communication device such as a base station or an access point by radio waves.

The quantum computer 200 shares the bus 109 with the classical computer 100. The quantum computer 200 is able to perform information communication with each element in the classical computer 100 via the bus 109.

The quantum computer 200 includes a quantum processing device 201 connected to the bus 109. The quantum processing device 201 performs gate operations on qubits according to the quantum gates represented in a quantum circuit and measures the states of the qubits. The quantum processing device 201 includes a qubit device 202 and a qubit control signal generator 203. The qubit device 202 holds the states of a plurality of qubits and performs gate operations on the qubits. The qubit control signal generator 203 generates control signals for instructing gate operations or measurements on the qubits.

The quantum computing system 30 implements the processing functions of the second embodiment with the hardware described above. The information processing apparatus 10 described in the first embodiment may also be implemented with the same hardware as the quantum computing system 30 illustrated in FIG. 3.

The classical computer 100 implements the processing functions of the second embodiment by executing programs recorded on a computer-readable recording medium, for example. The programs describing the processing contents to be executed by the classical computer 100 may be recorded on various recording media. For example, a program to be executed by the classical computer 100 may be stored in the storage device 103. The processor 101 loads at least part of the program from the storage device 103 into the memory 102 and executes the program. The program to be executed by the classical computer 100 may be recorded on a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

Next, an outline of error correction in quantum computation and usefulness of the STAR architecture will be described.

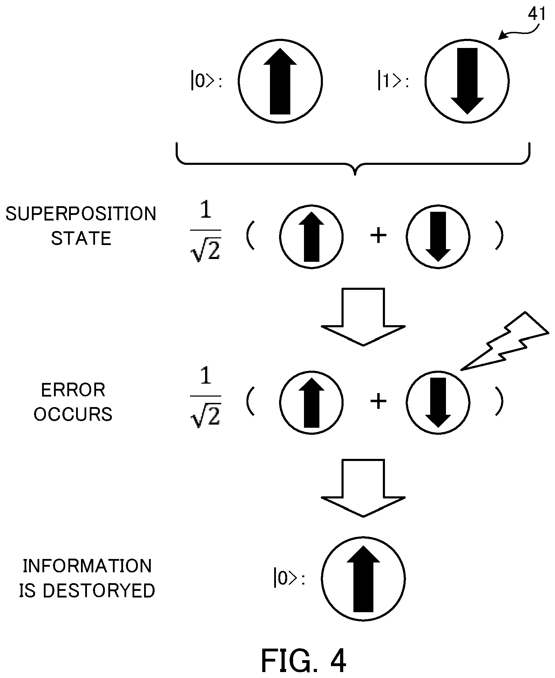

FIG. 4 illustrates the characteristics of a qubit. A qubit 41, which is the minimum unit of information in the quantum computer 200, exists in a state of |0〉 or |1〉 or in a superposition state of both. In the superposition state, the probabilities of measuring the qubit 41 in the states of 10) and |1〉 are obtained. For example, in the case where the states of |0〉 and |1〉 have equal probabilities, the superposition state of the qubit 41 is expressed as "2^{-1/2}(|0〉 + |1〉)".

Such information of the qubit 41 is destroyed (an error occurs) due to interactions with the environment, operational errors, and others. For example, if the superposition state is destroyed by an error, the state of the qubit 41 may collapse to a state such as |0〉. In order to improve the computational accuracy, it is demanded to detect qubits with errors and correct the states of the qubits to their correct states.

To meet the demand, a technique called quantum error correction has been proposed. In the quantum error correction, a qubit is encoded using a plurality of physical qubits. When encoding is performed, the states of one or more logical qubits are represented by a plurality of physical qubits used for the encoding. Qubits in which errors have occurred are detected and corrected based on the collective state of the plurality of encoded qubits.

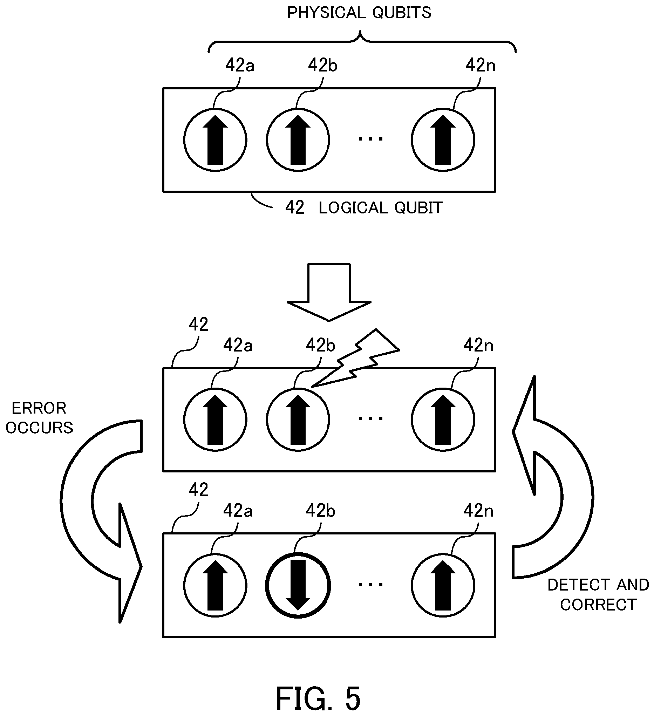

FIG. 5 illustrates an example of the quantum error correction. As illustrated in FIG. 5, a logical qubit 42 is defined by a plurality of physical qubits 42a, 42b, ···, and 42n. The example of FIG. 5 assumes that, when all the plurality of physical qubits 42a, 42b, ···, and 42n are in the state of 10), an error occurs and the physical qubit 42b is flipped to the state of |1〉. In this case, the error is detected based on information obtained from the states of the plurality of physical qubits 42a, 42b, ···, and 42n. Then, the physical qubit 42b in which the error has occurred is identified, and the state of the physical qubit 42b is corrected.

By appropriately performing the quantum error correction in this way, even if errors occur in physical qubits, the logical qubit 42 is able to maintain the correct state, as long as the number of errors is within a tolerance limit. Quantum computation involving such quantum error correction for logical qubits is achieved by combining predetermined basic gates.

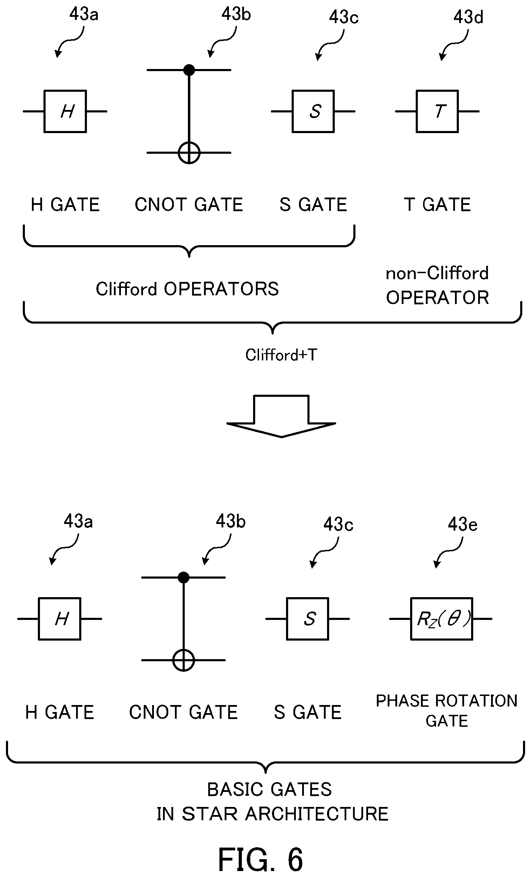

FIG. 6 illustrates an example of basic gates used in fault-tolerant quantum computation. Basic gates used in quantum computation involving quantum error correction are the H gate 43a, the CNOT gate 43b, the S gate 43c, and the T gate 43d. The H gate 43a is referred to as a Hadamard gate and is a quantum gate that rotates the state by 180 degrees around an axis that is 45 degrees between the Z axis and the X axis. The CNOT gate 43b is a quantum gate that keeps the state of the target qubit unchanged if the control qubit is in the state of 10), and flips the state of the target qubit (from |0〉 to 11), and from |1〉 to |0〉) if the control qubit is in the state of |1〉. The S gate 43c is a quantum gate that rotates the state by π/2 around the Z axis. The T gate 43d is a quantum gate that rotates the state by π/4 around the Z axis.

Among these gates, the H gate 43a, the CNOT gate 43b, and the S gate 43c are called Clifford operators. On the other hand, the T gate 43d is called a non-Clifford operator. These basic gates are collectively referred to as Clifford+T gates. The Clifford+T gates in the computation by the quantum computer 200 corresponds to AND, XOR, and NOT in the classical computer 100. That is, it is possible to execute various kinds of quantum computations by combining the Clifford+T quantum gates.

In fault-tolerant quantum computation using the Clifford+T gates, one million or more physical qubits are used to execute useful computations. A large proportion (e.g., 90% or more) of the huge number of physical qubits are used for arbitrary-angle rotations of logical qubits. Arbitrary-angle rotations involve gate operations using a large number of T gates 43d. In addition, a large number of physical qubits are used for error correction of the T gates 43d (which results in a high error correction cost). This is a major factor that increases the number of physical qubits for realizing FTQC.

Moreover, in most cases, an arbitrary-angle rotation is performed by repeating the gate operation of the T gate 43d about several tens of times. Therefore, the use of T gates 43d for arbitrary-angle rotations reduces the execution efficiency of the quantum circuit.

To address this, the STAR architecture uses a phase rotation gate 43e as a basic gate instead of the T gate 43d of the Clifford+T gates. The phase rotation gate 43e in the STAR architecture is implemented with a gate teleportation circuit using a predetermined resource state "|m_{θ*}〉_{L}". Here, θ_{*} denotes an arbitrary rotation angle. The state "|m_{θ*}〉" is defined as "|m_{θ*}〉 = R_{z}(θ_{*})|+〉 = 2^{-1/2}(e^{-iθ*/2}|0〉 + e^{+iθ*/2}|1〉)". "R_{Z}(θ_{*})" is defined as "R_{Z}(θ_{*}) = e^{iθ*Z}" (Z denotes a Pauli Z operator).

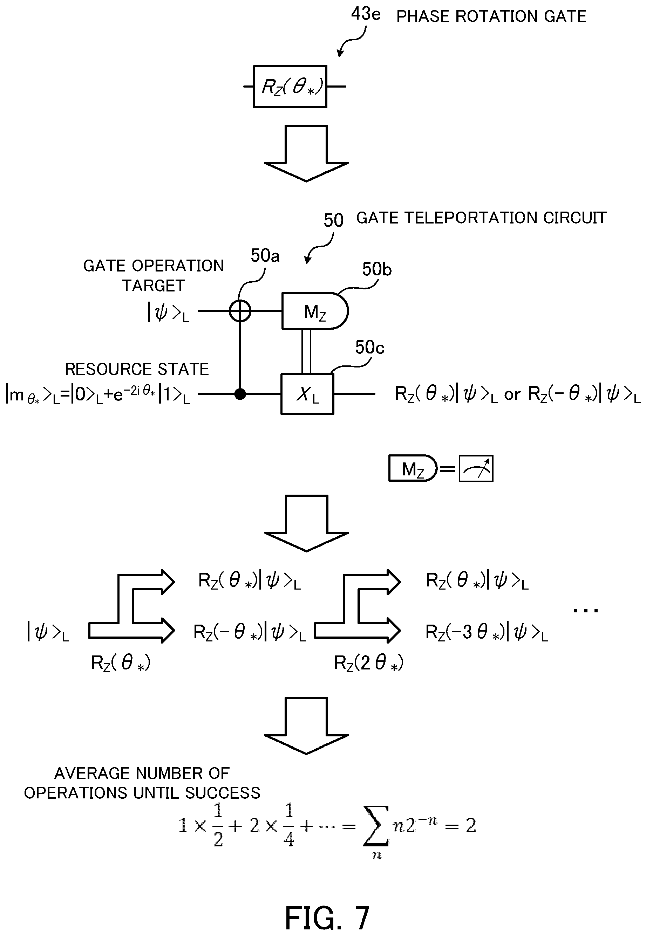

FIG. 7 illustrates an example of a quantum circuit that performs a gate operation for an arbitrary rotation. A gate teleportation circuit 50 is a quantum circuit that performs a rotation (R_{Z}(θ_{*})) by a logical rotation angle θ_{*}. The gate teleportation circuit 50 has two inputs: an operation target state "|ψ)_{L}" as a first qubit and a resource state "|m_{θ*}〉_{L}" as a second qubit.

In the gate teleportation circuit 50, the gate operation of a CNOT gate 50a is first performed with the second qubit as a control qubit and the first qubit as a target qubit. Then, a measurement 50b of the first qubit is performed. If the measurement result is "+1", the gate operation of an X gate 50c is performed on the second qubit.

When the measurement result of the first qubit is "+1", the state of the second qubit is "R_{Z}(θ_{*})|ψ〉_{L}". When the measurement result of the first qubit is "0", the state of the second qubit is "R_{Z}(-θ_{*})|ψ〉_{L}". Thus, after the gate operation for the arbitrary rotation by the gate teleportation circuit 50, the obtained state is either "R_{Z}(θ_{*})|ψ〉_{L}" or "R_{Z}(-θ_{*})|ψ〉_{L}". That is, the output state stochastically represents an inverse rotation. The probability that the output state is "R_{Z}(θ_{*})|ψ〉_{L}" and the probability that the output state is "R_{Z}(-θ_{*})|ψ〉_{L}" are each "1/2".

Since the output state of the gate teleportation circuit 50 stochastically represents a target rotation (forward rotation) or an inverse rotation, the quantum computing system 30 repeatedly performs the same gate operation until the target rotation is obtained.

For example, if a gate operation for a rotation by the target logical rotation angle θ_{*} fails and results in an inverse rotation (-θ_{*}), the quantum computing system 30 executes a rotation by an angle 2θ_{*} in the gate operation for the next rotation. If the gate operation for the rotation of the angle 2θ_{*} also fails and results in an inverse rotation (-2θ_{*}), it means that the total angle of the two rotations is -3θ_{*}. In this case, the quantum computing system 30 executes, for example, a rotation by an angle 4θ_{*} in the gate operation for the next rotation.

Assuming that the probability that a rotation succeeds and the probability that a rotation fails are each 1/2, the average number of rotation operations until success is "1 × (1/2) + 2 × (1/4) + ··· = Σₙn2⁻ⁿ = 2". That is, the quantum computing system 30 is able to achieve an arbitrary rotation by performing the gate operation of the gate teleportation circuit 50 twice on average.

The resource state "|m_{θ*}〉_{L}" is used as an input to the gate teleportation circuit 50. Therefore, a generation process of the resource state "|m_{θ*}〉_{L}" is performed before the execution of the gate teleportation. The accuracy of the generated resource state impacts the accuracy of the entire arbitrary rotation.

Techniques for the state preparation protocol that generates a resource state include techniques disclosed in the above-mentioned literatures (Akahoshi et al. and Choi et al.). For example, the technique disclosed in the literature (Choi et al.) has been found to provide high-precision rotation gates for small rotation angles.

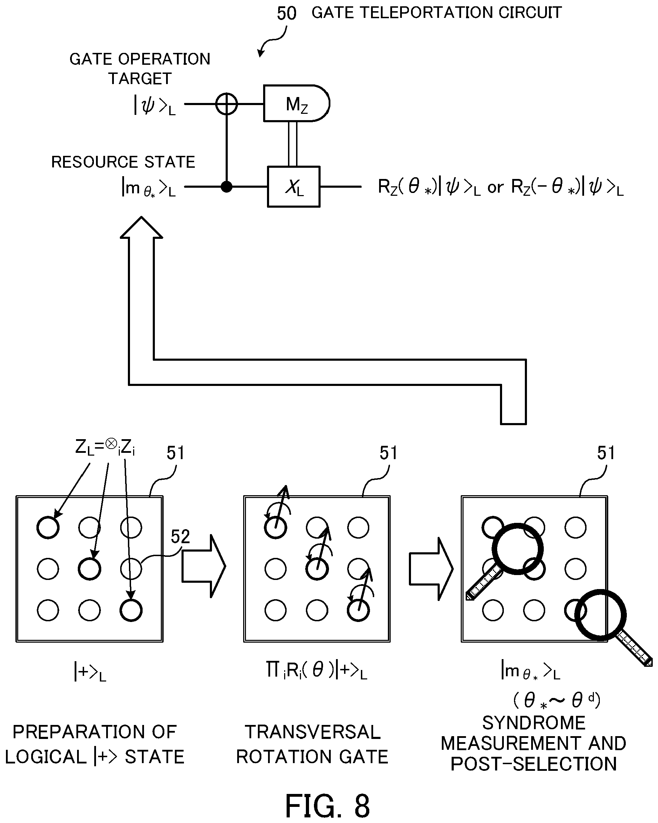

FIG. 8 illustrates an example of the state preparation protocol. A logical qubit 51 includes a plurality of physical qubits 52. In the example of FIG. 8, the logical qubit 51 is redundantly encoded in a surface code with code distance "3".

The quantum computing system 30 prepares a logical |+〉 state "|+〉_{L}" using the logical qubit 51. For example, the quantum computing system 30 applies a logical Z operator "Z_{L} = ⊗ᵢZᵢ" to three physical qubits among the plurality of physical qubits 52 (i is the qubit number of a physical qubit serving as a gate operation target).

The quantum computing system 30 performs the gate operation of a transversal rotation gate on the logical qubit 51. The transversal rotation gate is a quantum gate that simultaneously applies a Z rotation of a physical rotation angle θ to physical qubits constituting a logical qubit. The transversal rotation gate to the logical |+〉 state is expressed as "ΠᵢRᵢ(θ)|+〉_{L}".

The state represented by the logical qubit 51 is defined as "|m_{θ*})_{L}". The logical rotation angle θ_{*} depends on a physical rotation angle θ in the transversal rotation gate, and is "θ_{*} ~ θ^{d}" (d denotes code distance). The quantum computing system 30 determines the physical rotation angle θ so that the θ_{*} value becomes a target angle in the rotation gate operation to be performed on a logical qubit in the state |ψ〉_{L}. Then, the quantum computing system 30 performs a rotation gate operation of the physical rotation angle using the transversal rotation gate, thereby generating an appropriate resource state.

The quantum computing system 30 performs the syndrome measurement of the logical qubit 51 subjected to the gate operation of the transversal rotation gate. The syndrome measurement is a special quantum measurement operation that is performed to detect errors occurring in an error correction code state. The syndrome measurement is performed using ancilla qubits, not illustrated. The syndrome measurement is performed based on a quantum circuit that extracts only error information without destroying the quantum state encoded in the error correction code. A result of the syndrome measurement is represented as a binary value of ±1. If any error occurs, the value corresponding to the error in the syndrome measurement result is flipped.

The quantum computing system 30 post-selects a state of the logical qubit 51 in which no error has occurred as a resource state. The post-selection is a process of extracting only trials that yield a measurement result satisfying a specific condition after performing syndrome measurement, and discarding the other trials. The post-selection makes it possible to obtain only quantum states with desirable properties suitable for an intended purpose.

Note that there are a plurality of combination patterns of physical qubits that are subjected to gate operations in the preparation of the logical |+〉 state. Similarly, there are also a plurality of combination patterns of physical qubits that are used as the gate operation targets of the transversal rotation gate.

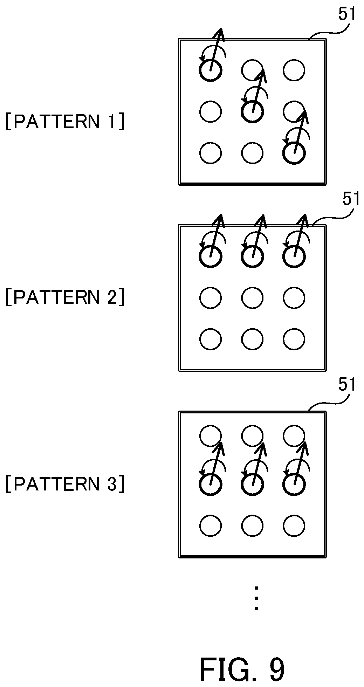

FIG. 9 illustrates examples of combination patterns of physical qubits that are used in the gate operation of a transversal rotation gate. As illustrated in FIG. 8, a pattern 1 is that three physical qubits arranged in the diagonal direction are the gate operation targets of the transversal rotation gate. The pattern 2 is that three physical qubits arranged on the first row in the horizontal direction are the gate operation targets of the transversal rotation gate. The pattern 3 is that three physical qubits arranged on the second row in the horizontal direction are the gate operation targets of the transversal rotation gate.

Note that the gate operation of the transversal rotation gate is collectively executable on a plurality of physical qubits.

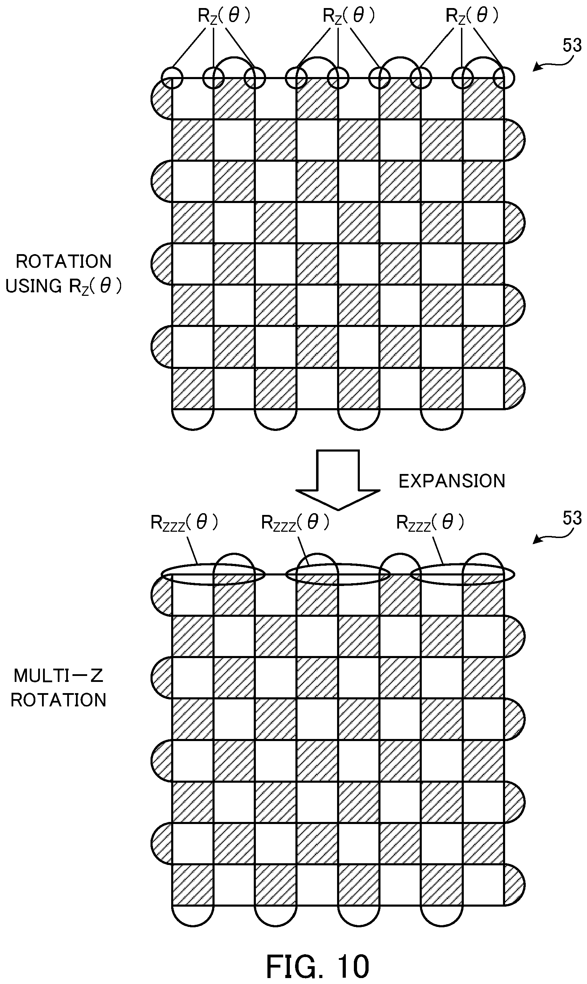

FIG. 10 illustrates an example of a transversal rotation gate that collectively rotates two or more physical qubits. In a logical qubit 53 illustrated in FIG. 10, the gate operation of the transversal rotation gate is performed on nine physical qubits arranged on the upper side among a plurality of physical qubits constituting a surface code. In the case where the rotation gate operation is individually performed, a rotation gate operation of R_{Z}(θ) is performed on each of the nine physical qubits involved with the logical Z operator.

On the other hand, the quantum computing system 30 is able to expand the transversal rotation gate so as to execute a k-weight multi-Z rotation R_{ZZ...Z}(θ) that covers the qubits involved with the logical Z operator. For example, the quantum computing system 30 divides the nine physical qubits into groups of three physical qubits and rotates the states of the three physical qubits using R_{ZZZ}(θ). The use of the multi-Z rotation to implement the transversal rotation gate makes it possible to increase resistance to a single-qubit error and reduce the error rate even in a region with large code distance.

Further, a transversal rotation gate operation may involve multi-Z rotations with different weights.

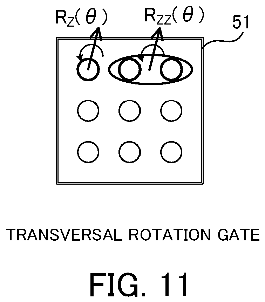

FIG. 11 illustrates an example of a transversal rotation gate that involves multi-Z rotations with a plurality of weights. In the example of FIG. 11, the quantum computing system 30 applies a rotation gate "R_{Z}(θ)" independently to one of three physical qubits that are the operation targets of the transversal rotation gate. The quantum computing system 30 applies a multi-Z rotation gate "R_{ZZ}(θ)" with a weight "2" to the remaining two physical qubits.

In the state preparation protocol using such a transversal rotation gate, a control error may occur in the gate operation (rotation operation at the physical level) of a rotation gate on physical qubits constituting a logical qubit. The control error is a deviation in the rotation angle. If the rotation angle deviates in the gate operation of a rotation gate on physical qubits, the rotation angle of the finally generated resource state also deviates by the same deviation amount.

In particular, the state preparation protocol using the transversal rotation gate is assumed to be applied to a rotation gate operation of an infinitesimal rotation. Such an infinitesimal rotation needs an exceptionally high-precision rotation. An error in a rotation angle during the gate operation of the infinitesimal rotation on a logical qubit is a main error factor.

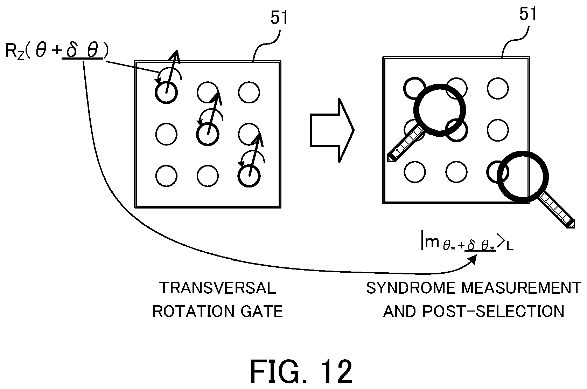

FIG. 12 illustrates an example of an error in a rotation operation at the physical level. For example, although the target rotation angle in the gate operation of a transversal rotation gate is θ, the actual rotation angle may be θ + δθ. If the deviation in the rotation angle is not so large that the error is detected in the syndrome measurement, the state of the logical qubit at that time is post-selected. The state of the logical qubit selected at this time is "|m_{θ*} + δθ_{*}〉_{L}". That is, the error in the rotation angle at the physical level appears as an error in the rotation angle at the logical level.

One of means to reduce an error in a rotation operation at the physical level is the one that uses a virtual Z gate described in the above-mentioned literature (McKay et al.). The use of a virtual Z gate to implement a Z rotation gate makes it possible to control a rotation angle with very high accuracy. That is, it is expected that the error δθ in the rotation angle does not substantially depend on the value of the target physical rotation angle θ.

As described above, the virtual Z gate itself is executable with exceptionally high accuracy. If, however, a control error occurs in a CNOT gate or during a standby time before or after the virtual Z gate, the control error becomes equivalent to a control error in the rotation gate.

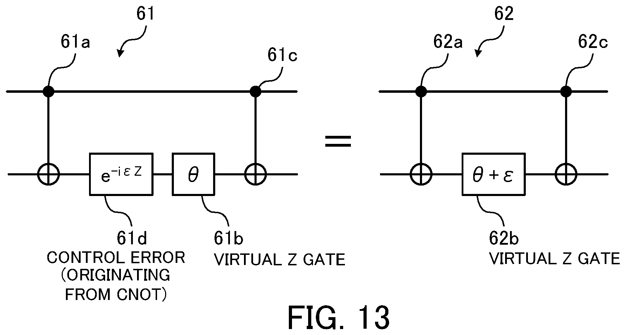

FIG. 13 illustrates an example of a control error that occurs despite using a virtual Z gate. A quantum circuit 61 illustrated in FIG. 13 is a quantum circuit that implements a two-qubit Z rotation gate "R_{ZZ}(θ)". In the quantum circuit 61, a CNOT gate 61a is first arranged, a virtual Z gate 61b is arranged on a target qubit of the CNOT gate, and a CNOT gate 61c is further arranged.

When the quantum circuit 61 is executed, a control error 61d occurs in the gate operation of the CNOT gate 61a. The control error 61d appears as a Z rotation "e^{-iεZ}" (ε is a rotation angle generated as an error) of the CNOT gate 61a on the target qubit. This control error 61d is equivalent to a control error occurring in the virtual Z gate 61b. That is, as seen in a quantum circuit 62, the rotation angle of the virtual Z gate 62b arranged between the CNOT gates 62a and 62c deviates from the target rotation angle θ to "θ + ε".

To address this, the quantum computing system 30 introduces randomness into the rotation directions in rotation operations on physical qubits in the gate operation of the transversal rotation gate. For example, the quantum computing system 30 generates a resource state with the state preparation protocol in the following procedure.

(Procedure 1) The quantum computing system 30 sets a physical-level rotation angle θ on the basis of a target logical rotation angle θ_{*}.

(Procedure 2) The quantum computing system 30 executes a transversal rotation gate in which the rotation directions for the individual qubits are randomly inverted.

(Procedure 3) The quantum computing system 30 provides feedback to an output state under actually sampled inversion rules.

The above procedure makes it possible to significantly mitigate the impact of a control error in the resource state preparation (to be precise, the even function component of the control error).

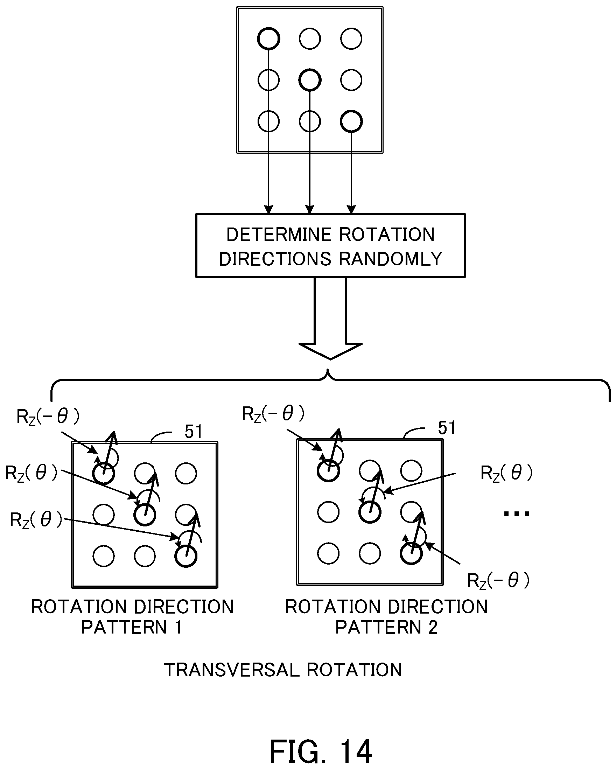

FIG. 14 illustrates an example of the gate operation of the transversal rotation gate using inverse rotations randomly applied in rotation directions. The quantum computing system 30 sets a rotation direction for each of a plurality of physical qubits, which are operation targets, in the transversal rotation gate so that the rotation directions are inverted randomly (with a probability of 1/2). For example, among three physical qubits that are rotation operation targets in the logical qubit 51, only one physical qubit may be rotated in the reverse direction (rotation direction pattern 1), or two physical qubits may be rotated in the reverse direction (rotation direction pattern 2).

The quantum computing system 30 executes the transversal rotation gate in which such randomness is introduced, and then performs syndrome measurement and post-selection. Here, there is a possibility that the state of a post-selected logical qubit 51 represents a rotation in the reverse direction. Therefore, in the case where the rotation direction of the logical qubit 51 is also the reverse direction, the quantum computing system 30 corrects the state obtained by the post-selection so as to match a state that is obtained by applying the target rotation gate.

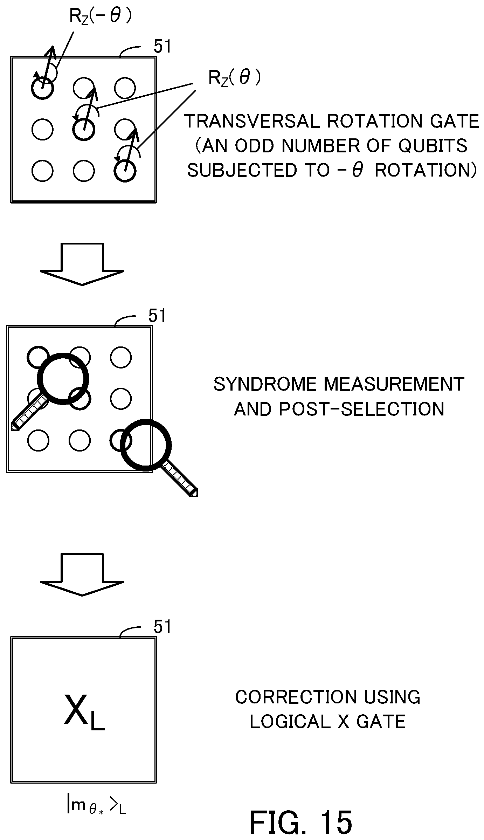

FIG. 15 illustrates an example of a correction process for a state obtained by post-selection. When inverse rotations are randomly applied in rotation directions, the resource state that is output represents a rotation direction that is inverted per inverse rotation applied to a physical qubit. Therefore, in the case where the number of qubits rotated in the reverse direction is an odd number, the state obtained through the post-selection represents an opposite rotation to the target rotation. In this case, the quantum computing system 30 applies a logical X gate to the state obtained by the post-selection so as to return the rotation direction of the state to the original direction. As a result, the resource state "|m_{θ*}〉_{L}" with the target rotation angle is obtained.

Here, the virtual Z gate is used to suppress the error δθ of the rotation angle in the physical-level rotation.

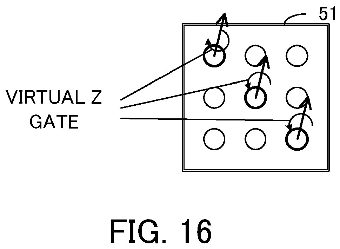

FIG. 16 illustrates an example in which inverse rotations randomly applied in rotation directions are implemented using a virtual Z gate. For example, the quantum computing system 30 implements phase rotations, which are applied respectively to three physical qubits in the logical qubit 51, using a virtual Z gate. This suppresses errors in the individual rotations.

A multi-Pauli Z rotation gate may also be implemented using a virtual Z gate.

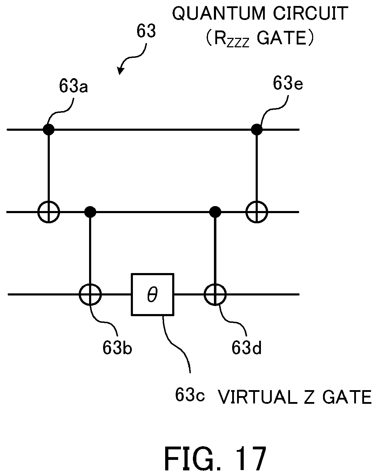

FIG. 17 illustrates an example of a quantum circuit of a multi-Pauli Z rotation gate, implemented using a virtual Z gate. A quantum circuit 63 illustrated in FIG. 17 is a quantum circuit for implementing R_{ZZZ}(θ) that performs a phase rotation operation on three qubits.

In the quantum circuit 63, first, a CNOT gate 63a that uses the first physical qubit as a control qubit and uses the second physical qubit as a target qubit is arranged. Next to the CNOT gate 63a, a CNOT gate 63b that uses the second physical qubit as a control qubit and uses the third physical qubit as a target qubit is arranged. Next, a virtual Z gate 63c is arranged on the third physical qubit.

Next to the virtual Z gate 63c, a CNOT gate 63d that uses the second physical qubit as a control qubit and uses the third physical qubit as a target qubit is arranged. Lastly, a CNOT gate 63e that uses the first physical qubit as a control qubit and uses the second physical qubit as a target qubit is arranged.

By causing the quantum computer 200 to perform the gate operations based on the quantum circuit 63, the rotation of R_{ZZZ}(θ) is implemented by the virtual Z gate.

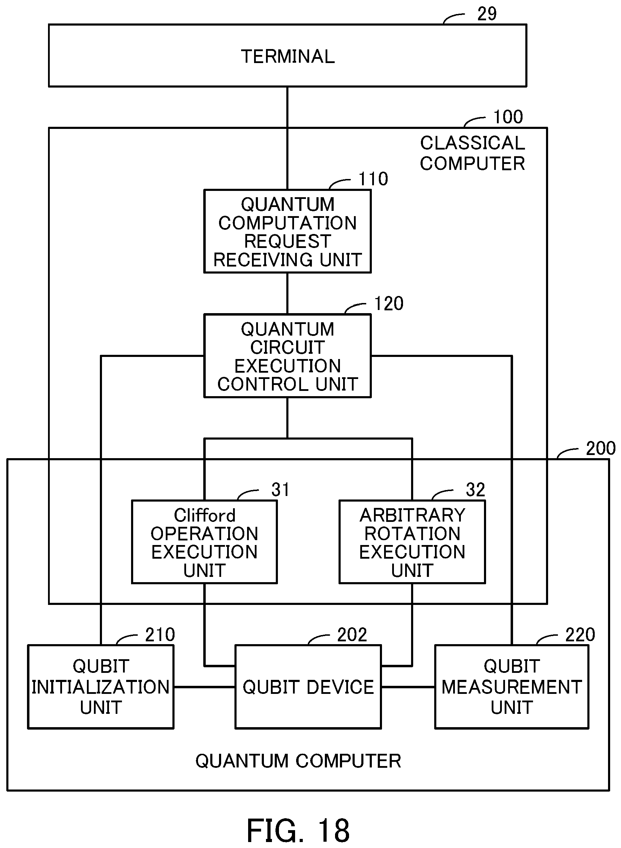

FIG. 18 is a block diagram illustrating an example of functions for quantum computation in the quantum computing system. The classical computer 100 includes a quantum computation request receiving unit 110 and a quantum circuit execution control unit 120. The quantum computer 200 includes a qubit initialization unit 210 and a qubit measurement unit 220. Functions implemented by the cooperation of the classical computer 100 and the quantum computer 200 include a Clifford operation execution unit 31 and an arbitrary rotation execution unit 32.

The quantum computation request receiving unit 110 receives a quantum computation request from the terminal 29. The quantum computation request includes, for example, a quantum circuit corresponding to a problem to be solved. The quantum computation request receiving unit 110 transmits, to the quantum circuit execution control unit 120, an execution command for the quantum circuit corresponding to the problem to be solved, indicated by the quantum computation request. When the quantum computation request receiving unit 110 receives the result of the quantum computation based on the quantum circuit from the quantum circuit execution control unit 120, the quantum computation request receiving unit 110 transmits the computation result to the terminal 29.

The quantum circuit execution control unit 120 transmits an execution command for each quantum gate to the quantum computer 200 in the order indicated by the quantum circuit obtained as an execution target. When the quantum circuit execution control unit 120 receives, from the quantum computer 200, a measurement result indicating the states of the qubits after the gate operations based on the quantum circuit, the quantum circuit execution control unit 120 computes a solution to the problem to be solved on the basis of the measurement result. Then, the quantum circuit execution control unit 120 transmits the solution to the problem to be solved to the quantum computation request receiving unit 110 as the result of the quantum computation.

The qubit initialization unit 210 initializes the logical qubit in accordance with a command from the quantum circuit execution control unit 120. For example, the qubit initialization unit 210 initializes the physical qubits constituting the logical qubit in the qubit device 202 to predetermined states.

The qubit measurement unit 220 measures the state of the logical qubit. For example, the qubit measurement unit 220 measures the states of the physical qubits constituting the logical qubit, and determines the state of the logical qubit on the basis of the measurement result. The qubit measurement unit 220 transmits the measured state of the logical qubit to the classical computer 100.

The Clifford operation execution unit 31 performs Clifford operations on the logical qubit and is implemented by the classical computer 100 and the quantum computer 200 cooperating with each other. For example, the quantum computer 200 performs the gate operations of the quantum gates corresponding to the Clifford operations on the physical qubits constituting the logical qubit. Then, the Clifford operation execution unit 31 performs the syndrome measurement of the operated physical qubits. The Clifford operation execution unit 31 detects errors on the basis of the result of the syndrome measurement. In the case where an error is detected, the Clifford operation execution unit 31 identifies an error location, performs a gate operation on the physical qubit at the error location, and corrects the error.

Among the functions of the Clifford operation execution unit 31, the error detection and error location identification are performed by the classical computer 100. The gate operations of the quantum gates corresponding to the Clifford operations, syndrome measurement, and error correction are performed by the quantum computer 200.

The arbitrary rotation execution unit 32 performs the gate operation of an arbitrary rotation on the logical qubit and is implemented by the classical computer 100 and the quantum computer 200 cooperating with each other.

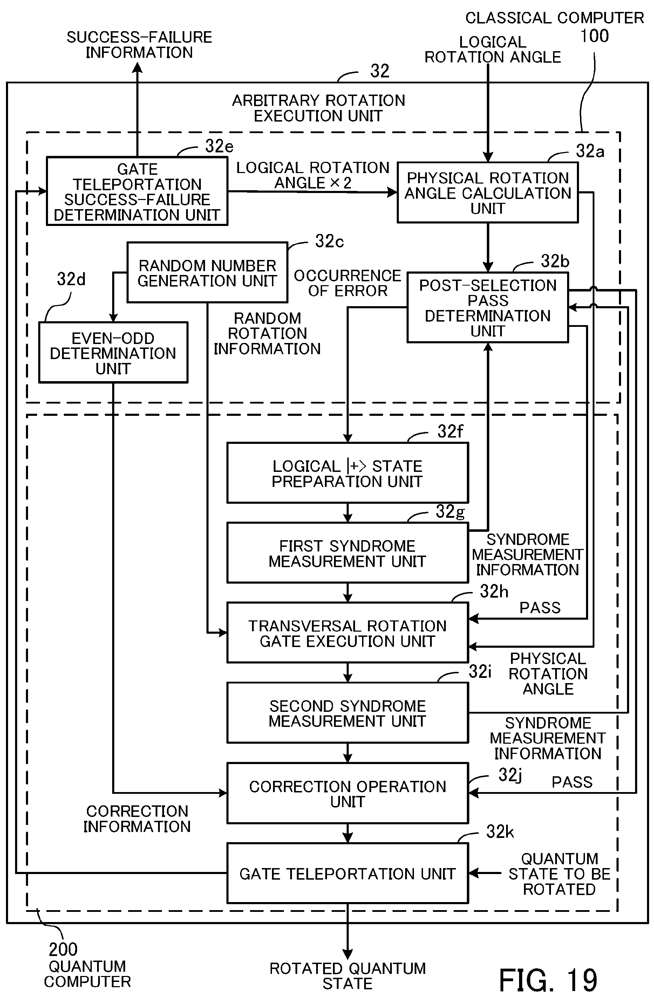

FIG. 19 is a block diagram illustrating an example of functions of the arbitrary rotation execution unit. The functions implemented by the classical computer 100 in the arbitrary rotation execution unit 32 include a physical rotation angle calculation unit 32a, a post-selection pass determination unit 32b, a random number generation unit 32c, an even-odd determination unit 32d, and a gate teleportation success-failure determination unit 32e.

The physical rotation angle calculation unit 32a converts a logical rotation angle into a physical rotation angle. For example, the physical rotation angle calculation unit 32a calculates the physical rotation angle using the following formula. ${θ}_{∗} = arcsin \left(\frac{{sin}^{d} θ}{{sin}^{2 d} θ + {cos}^{2 d} θ}\right)$

The physical rotation angle calculation unit 32a calculates the value of the physical rotation angle θ so that the logical rotation angle θ_{*} becomes a target angle, on the basis of Formula (1). The physical rotation angle calculation unit 32a transmits the calculated value of the physical rotation angle θ to a transversal rotation gate execution unit 32h. In addition, the physical rotation angle calculation unit 32a notifies the post-selection pass determination unit 32b that the setting of the physical rotation angle θ is complete.

Upon receiving an instruction to double the logical rotation angle from the gate teleportation success-failure determination unit 32e, the physical rotation angle calculation unit 32a calculates the physical rotation angle θ on the basis of the corrected logical rotation angle. Then, the physical rotation angle calculation unit 32a transmits the calculated value of the physical rotation angle θ to the transversal rotation gate execution unit 32h and notifies the post-selection pass determination unit 32b that the setting of the physical rotation angle θ is complete.

When the setting of the physical rotation angle θ is complete, the post-selection pass determination unit 32b transmits a preparation command for a logical |+〉 state to a logical |+〉 state preparation unit 32f. Upon receiving syndrome measurement information from a first syndrome measurement unit 32g or a second syndrome measurement unit 32i, the post-selection pass determination unit 32b determines the presence or absence of an error on the basis of the syndrome measurement information. When an error is detected, the post-selection pass determination unit 32b instructs the logical |+〉 state preparation unit 32f to prepare the logical |+〉 state.

In the case where no error is detected based on the syndrome measurement information received from the first syndrome measurement unit 32g, the post-selection pass determination unit 32b notifies the transversal rotation gate execution unit 32h that the error detection process has passed. In the case where no error is detected on the basis of the syndrome measurement information received from the second syndrome measurement unit 32i, the post-selection pass determination unit 32b notifies a correction operation unit 32j that the error detection process has passed.

The random number generation unit 32c generates a random number corresponding to each of the physical qubits that are the operation targets of the transversal rotation gate. On the basis of each generated random number, the random number generation unit 32c determines whether the rotation direction of the rotation gate that is applied to the physical qubit corresponding to the random number is the forward direction or the reverse direction. For example, the random number generation unit 32c generates a random number in the range of 0 to 1. Then, the random number generation unit 32c sets a rotation in the forward direction when the generated random number is less than 0.5, and sets a rotation in the reverse direction when the generated random number is 0.5 or more. The random number generation unit 32c transmits random rotation information indicating the rotation direction for each operation target physical qubit to the transversal rotation gate execution unit 32h. The random number generation unit 32c also transmits the random rotation information to the even-odd determination unit 32d.

The even-odd determination unit 32d determines on the basis of the random rotation information whether the number of physical qubits on which the rotation gate operation of an inverse rotation is performed, among the physical qubits that are the operation targets of the transversal rotation gate, is an even number or an odd number. If the number of physical qubits to be subjected to the inverse rotation is an odd number, the even-odd determination unit 32d transmits, to the correction operation unit 32j, correction information indicating that a post-selected state needs to be corrected. In addition, if the number of physical qubits to be subjected to the inverse rotation is an even number, the even-odd determination unit 32d transmits, to the correction operation unit 32j, correction information indicating that a post-selected state does not need to be corrected.

The gate teleportation success-failure determination unit 32e determines whether the arbitrary rotation of the logical qubit by a gate teleportation unit 32k is a forward rotation "R_{Z}(θ)|ψ〉_{L}" or an inverse rotation "R_{Z}(-θ)|ψ〉_{L}". In the case of the forward rotation, the gate teleportation success-failure determination unit 32e outputs success-failure information indicating that the gate operation of the arbitrary rotation is complete. In the case of the inverse rotation, the gate teleportation success-failure determination unit 32e instructs the physical rotation angle calculation unit 32a to double the physical rotation angle.

The functions implemented by the quantum computer 200 in the arbitrary rotation execution unit 32 includes the logical |+〉 state preparation unit 32f, the first syndrome measurement unit 32g, the transversal rotation gate execution unit 32h, the second syndrome measurement unit 32i, the correction operation unit 32j, and the gate teleportation unit 32k.

The logical |+〉 state preparation unit 32f prepares a logical |+〉 state of the logical qubit in response to an instruction from the post-selection pass determination unit 32b.

The first syndrome measurement unit 32g performs the syndrome measurement of the logical qubit in the logical |+〉 state. The first syndrome measurement unit 32g transmits syndrome measurement information indicating a result of the syndrome measurement to the post-selection pass determination unit 32b.

In the case where the error detection has passed without detecting any errors through the syndrome measurement by the first syndrome measurement unit 32g, the transversal rotation gate execution unit 32h performs the gate operation of the transversal rotation gate. For example, the transversal rotation gate execution unit 32h recognizes the rotation direction for each physical qubit, which is an operation target, on the basis of the random rotation information. Then, the transversal rotation gate execution unit 32h performs the Z rotation gate operation of the designated physical rotation angle in the determined rotation direction on each operation target physical qubit.

The second syndrome measurement unit 32i performs the syndrome measurement of the logical qubit after the gate operation of the transversal rotation gate. The second syndrome measurement unit 32i transmits syndrome measurement information indicating the result of the syndrome measurement to the post-selection pass determination unit 32b.

In the case where the error detection has passed without detecting any errors through the syndrome measurement by the second syndrome measurement unit 32i and the correction information indicates that correction needs to be performed, the correction operation unit 32j performs a correction operation on the state of the post-selected logical qubit. For example, in the case where the correction needs to be performed, the correction operation unit 32j performs a gate operation to apply a logical X gate to the logical qubit. The corrected state of the logical qubit is set as a resource state. In the case where the correction does not need to be performed, the correction operation unit 32j sets the state of the post-selected logical qubit as a resource state.

Using the resource state, the gate teleportation unit 32k performs an arbitrary rotation with the gate teleportation circuit on the quantum state of the logical qubit that is a rotation target. As a result, the operation target logical qubit has a rotated quantum state. The gate teleportation unit 32k notifies the gate teleportation success-failure determination unit 32e of information indicating the rotated state of the logical qubit.

Next, a procedure performed by the quantum computing system 30 in the execution of a quantum circuit configured by "Clifford+φ (arbitrary rotation)" will be described.

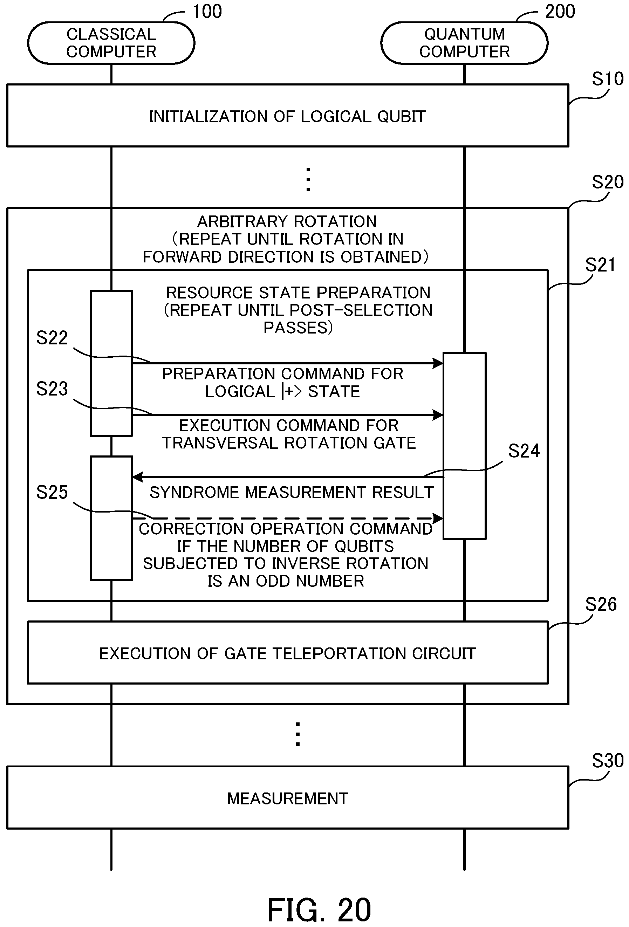

FIG. 20 is a sequence diagram illustrating an example procedure for quantum circuit computation. In FIG. 20, the gate operations of Clifford gates are omitted. First, the classical computer 100 and the quantum computer 200 cooperate with each other to perform an initialization process on a logical qubit (step S10). Thereafter, the classical computer 100 and the quantum computer 200 cooperate with each other to sequentially perform the operations of the quantum gates defined in a quantum circuit.

When a quantum gate to be executed is an arbitrary rotation gate, the classical computer 100 and the quantum computer 200 cooperate with each other to perform an arbitrary rotation gate operation based on the STAR architecture (step S20). In the arbitrary rotation process, the inverse rotation relative to the target rotation is performed with a probability of 1/2. Therefore, a rotation is repeated until the rotation is performed in the forward direction while updating the rotation angle. The arbitrary rotation process is divided into a resource state preparation process (step S21) and a gate teleportation circuit execution process (step S26).

In the resource state preparation process (step S21), first, the classical computer 100 transmits a preparation command for a logical |+〉 state to the quantum computer 200 (step S22). In response to the preparation command for the logical |+〉 state, the quantum computer 200 performs gate operations so that the logical qubit to be subjected to the arbitrarily rotation is in the |+〉 state.

Next, the classical computer 100 transmits a transversal rotation gate execution command to the quantum computer 200 (step S23). The quantum computer 200 performs the gate operation of a transversal rotation gate on the logical qubit and then performs the syndrome measurement of the logical qubit. Then, the quantum computer 200 transmits the syndrome measurement result to the classical computer 100 (step S24).

The classical computer 100 performs post-selection pass determination on the basis of the syndrome measurement result. If no error is detected and if the number of physical qubits subjected to the inverse rotation in the gate operation of the transversal rotation gate is an odd number, the classical computer 100 transmits a correction operation command to the quantum computer 200 (step S25). The quantum computer 200 performs the gate operation of a logical X gate on the logical qubit.

The resource state preparation process is repeated until the post-selection passes. When the resource state preparation process is complete, the classical computer 100 and the quantum computer 200 cooperate with each other to execute the gate teleportation circuit (step S26).

The classical computer 100 and the quantum computer 200 perform the arbitrary rotation process (step S20) at each execution timing of an arbitrary-rotation quantum gate. When all the gate operations of the quantum circuit are complete, the classical computer 100 and the quantum computer 200 cooperate with each other to measure the quantum state (step S30). The classical computer 100 obtains a solution to the problem to be solved from the measurement result of the quantum state, and outputs the solution.

As described above, the quantum computation is executed by cooperative processing between the classical computer 100 and the quantum computer 200. Hereinafter, the processes performed by the classical computer 100 in quantum computation will be described in detail.

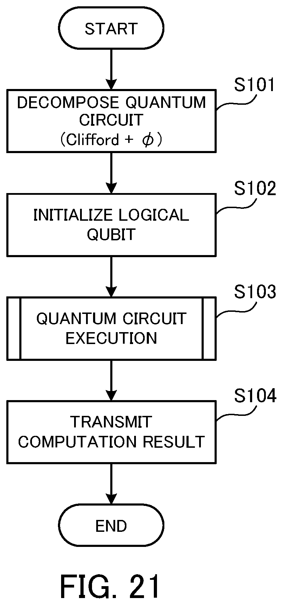

FIG. 21 is a flowchart illustrating an example procedure for quantum computation in the classical computer. Hereinafter, the process illustrated in FIG. 21 will be described in order of step numbers.

[Step S101] When the quantum computation request receiving unit 110 receives a quantum computation request from the terminal 29, the quantum computation request receiving unit 110 decomposes a quantum gate (for example, a three-qubit gate) in a quantum circuit to be executed into a quantum circuit in which quantum gates of "Clifford+φ (arbitrary rotation)" are combined.

[Step S102] The quantum circuit execution control unit 120 performs an initialization process on a logical qubit. For example, the quantum circuit execution control unit 120 identifies physical qubits to be used for the execution of the quantum circuit, and transmits an initialization command for the physical qubits to the qubit initialization unit 210 of the quantum computer 200. In response to the initialization command, the qubit initialization unit 210 initializes the states of the physical qubits to predetermined states.

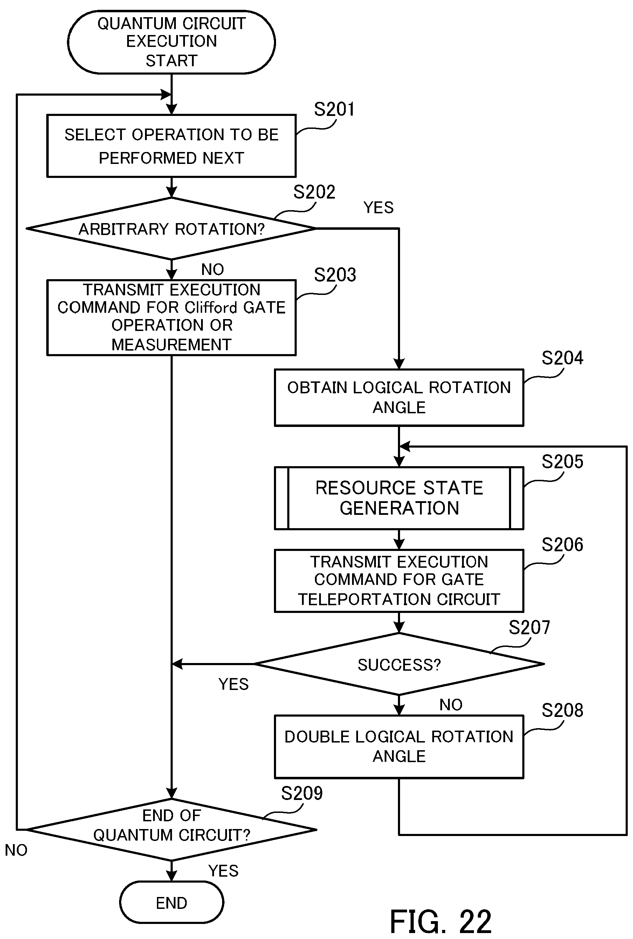

[Step S103] When the quantum circuit execution control unit 120 receives a response indicating the initialization completion from the qubit initialization unit 210, the quantum circuit execution control unit 120 performs a quantum circuit execution process. Details of the quantum circuit execution process will be described later (see FIG. 22).

[Step S104] When receiving the measurement result of the final state of the logical qubit after the execution of the quantum circuit is complete, the quantum circuit execution control unit 120 computes a solution to the problem to be solved on the basis of the measurement result. Then, the quantum circuit execution control unit 120 transmits the computation result to the quantum calculation request receiving unit 110. The quantum computation request receiving unit 110 transmits the computation result to the terminal 29.

The quantum computation using the quantum circuit is executed in this way. Next, the quantum circuit execution process will be described in detail.

FIG. 22 is a flowchart illustrating an example procedure for quantum circuit execution. Hereinafter, the process illustrated in FIG. 22 will be described in order of step numbers.

[Step S201] The quantum circuit execution control unit 120 selects an operation (gate operation or measurement) to be performed next from a quantum circuit.

[Step S202] The quantum circuit execution control unit 120 determines whether the selected operation is the gate operation of an arbitrary-rotation quantum gate. If the next quantum gate is the gate operation of a Clifford gate or measurement, the quantum circuit execution control unit 120 advances the process to step S203. If the next quantum gate is an arbitrary-rotation quantum gate, the quantum circuit execution control unit 120 advances the process to step S204.

[Step S203] The quantum circuit execution control unit 120 transmits, to the quantum computer 200, an execution command for the gate operation of the Clifford gate or the measurement to be executed next. If the transmitted command is a gate operation command for the Clifford gate, the Clifford operation execution unit 31 in the quantum computer 200 performs the gate operation of the Clifford gate on the logical qubit. If the transmitted command is a measurement command, the qubit measurement unit 220 measures the states of the physical qubits constituting the logical qubit. The qubit measurement unit 220 transmits the measurement result to the quantum circuit execution control unit 120. Thereafter, the quantum circuit execution control unit 120 advances the processing to step S209.

[Step S204] The quantum circuit execution control unit 120 obtains the rotation angle of a rotation gate to be executed next as a logical rotation angle. The quantum circuit execution control unit 120 passes the obtained logical rotation angle to the arbitrary rotation execution unit 32.

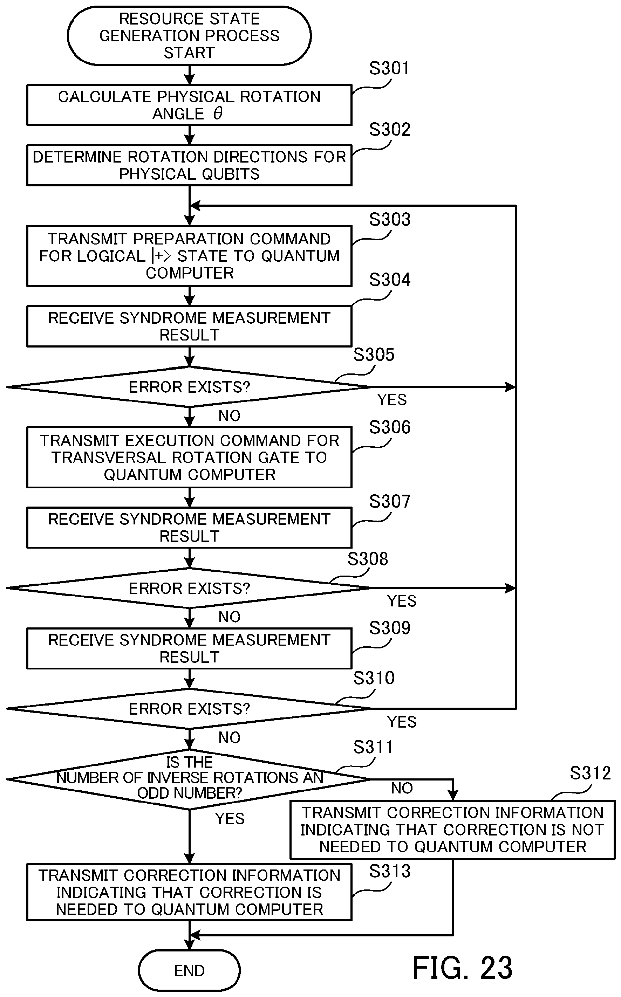

[Step S205] The arbitrary rotation execution unit 32 performs a resource state generation process. Details of the resource state generation process will be described later (see FIG. 23).

[Step S206] The arbitrary rotation execution unit 32 transmits an execution command for a gate teleportation circuit to the quantum computer 200. Then, the gate teleportation unit 32k in the quantum computer 200 performs the gate operation of the gate teleportation circuit using the logical qubit indicating the quantum state to be rotated and the logical qubit indicating the resource state as inputs.

[Step S207] The gate teleportation success-failure determination unit 32e determines whether the arbitrary rotation using the gate teleportation circuit has succeeded. If a forward rotation has been performed, the gate teleportation success-failure determination unit 32e determines a success, and advances the process to step S209. If an inverse rotation has been performed, the gate teleportation success-failure determination unit 32e determines a failure, and advances the process to step S208.

[Step S208] The gate teleportation success-failure determination unit 32e updates the logical rotation angle by doubling the current value. Thereafter, the gate teleportation success-failure determination unit 32e advances the process to step S205.

[Step S209] The quantum circuit execution control unit 120 determines whether the last operation in the quantum circuit is complete. If the last operation in the quantum circuit is complete, the quantum circuit execution control unit 120 completes the quantum circuit execution process. If any unprocessed operation remains, the quantum circuit execution control unit 120 advances the process to step S201.

Next, the resource state generation process will be described in detail.

FIG. 23 is a flowchart illustrating an example procedure for resource state generation. Hereinafter, the process illustrated in FIG. 23 will be described in order of step numbers.

[Step S301] The physical rotation angle calculation unit 32a calculates a physical rotation angle based on a logical rotation angle. For example, the physical rotation angle calculation unit 32a calculates the physical rotation angle θ so that the value on the right-hand side of Formula (1) becomes the predetermined logical rotation angle.

[Step S302] The random number generation unit 32c generates a random number corresponding to each of a plurality of physical qubits to which the transversal rotation gate is applied in the logical qubit, and determines a rotation direction for each physical qubit on the basis of the random number. The random number generation unit 32c passes random rotation information indicating the rotation direction for each physical qubit to the transversal rotation gate execution unit 32h.

[Step S303] The post-selection pass determination unit 32b transmits a preparation command for a logical |+〉 state to the logical |+〉 state preparation unit 32f of the quantum computer 200. Then, the logical |+〉 state preparation unit 32f performs gate operations on at least one of the physical qubits constituting the logical qubit so that the state of the logical qubit to be subjected to the arbitrary rotation becomes |+〉_{L}. Thereafter, the first syndrome measurement unit 32g performs the syndrome measurement of the logical qubit.

[Step S304] The post-selection pass determination unit 32b receives the syndrome measurement result from the first syndrome measurement unit 32g.

[Step S305] The post-selection pass determination unit 32b determines based on the syndrome measurement result whether an error has occurred in the logical |+〉 state. If an error has occurred, the post-selection pass determination unit 32b advances the process to step S303, and prepares a logical |+〉 state again. If no error has occurred, the post-selection pass determination unit 32b advances the process to step S306.

[Step S306] The post-selection pass determination unit 32b transmits an execution command for the transversal rotation gate to the transversal rotation gate execution unit 32h in the quantum computer 200. Then, the transversal rotation gate execution unit 32h performs the gate operation of the transversal rotation gate. The transversal rotation gate execution unit 32h applies the rotation directions of the Z rotation to the operation target physical qubits in accordance with the random rotation information received from the random number generation unit 32c. Thereafter, the second syndrome measurement unit 32i performs the syndrome measurement of the logical qubit.

[Step S307] The post-selection pass determination unit 32b receives the syndrome measurement result from the second syndrome measurement unit 32i.

[Step S308] The post-selection pass determination unit 32b determines based on the syndrome measurement result whether an error has occurred in the gate operation result of the transversal rotation gate. If an error has occurred, the post-selection pass determination unit 32b advances the process to step S303 and performs the process again from the preparation of a logical |+〉 state. If no error has occurred, the post-selection pass determination unit 32b advances the process to step S309.

While the post-selection pass determination unit 32b performs the error determination, the second syndrome measurement unit 32i performs the syndrome measurement of the logical qubit again. This is to prevent any errors occurring in the logical qubit from being undetected due to an error occurring during the syndrome measurement. The second syndrome measurement unit 32i transmits the measurement result of the second syndrome measurement to the post-selection pass determination unit 32b.

[Step S309] The post-selection pass determination unit 32b receives the syndrome measurement result from the second syndrome measurement unit 32i.

[Step S310] The post-selection pass determination unit 32b determines based on the syndrome measurement result whether an error has occurred in the gate operation result of the transversal rotation gate. If an error has occurred, the post-selection pass determination unit 32b advances the process to step S303 and performs the process again from the preparation of a logical |+〉 state. If no error has occurred, the post-selection pass determination unit 32b advances the process to step S311.

[Step S311] The even-odd determination unit 32d determines whether the number of physical qubits rotated in the reverse direction, among the physical qubits that are the gate operation targets of the transversal rotation gate, is an odd number. If the number of physical qubits is an odd number, the even-odd determination unit 32d advances the process to step S313. If the number of physical qubits is an even number, the even-odd determination unit 32d advances the process to step S312.

[Step S312] The even-odd determination unit 32d transmits correction information indicating that the state of the logical qubit does not need to be corrected, to the correction operation unit 32j of the quantum computer 200, and completes the resource state generation process.

[Step S313] The even-odd determination unit 32d transmits correction information indicating that the state of the logical qubit needs to be corrected, to the correction operation unit 32j of the quantum computer 200. The correction operation unit 32j performs the gate operation of a logical X gate on the logical qubit according to the correction information.

In this way, the resource state is generated by the transversal rotation gate in which the rotation directions for the qubits are randomly inverted. The above process of generating a resource state is able to reduce control errors. Hereinafter, the effect of reducing control errors will be described in detail using a specific example.

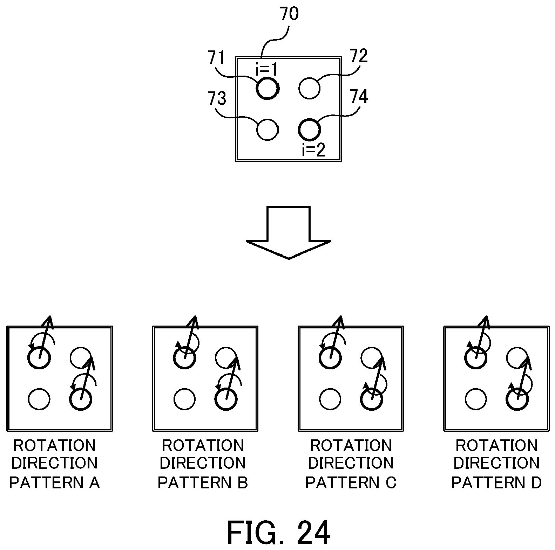

FIG. 24 illustrates examples of rotation direction patterns in which rotation directions for individual physical qubits constituting a logical qubit are randomly inverted. In the example of FIG. 24, a resource state is generated under the following conditions.

(Condition 1) A logical qubit 70 is encoded in a surface code with code distance "2". That is, the state of the logical qubit 70 is represented by four physical qubits 71 to 74.

(Condition 2) The gate operation of a transversal rotation gate R_{Z}(±θ) is executed on the logical qubit 70. In the example of FIG. 24, the two physical qubits 71 and 74 on a diagonal line are the gate operation targets of the transversal rotation gate. Since the number of physical qubits to be subjected to the rotation gate operation is "2", four rotation direction patterns exist for the physical qubits 71 and 74.

(Condition 3) It is assumed that the logical rotation angle θ_{*} of the rotation gate to be executed is sufficiently small.

(Condition 4) For simplicity, it is assumed that any error other than a deterministic control error does not occur.

(Condition 5) A virtual Z gate is used in the rotation gate operation for the physical qubits 71 and 74. Therefore, the rotation angle error does not depend on the physical rotation angle θ at the physical level.

(Condition 6) It is assumed that, after the syndrome measurement, a rotation angle error of "θ → θ + fᵢ" occurs in the gate operation of the rotation gate on each physical qubit 71 and 74 (i = 1 and 2 are the labels of physical qubits to which the rotation gate is applied). It is assumed that the label of the physical qubit 71 is "1" and the label of the physical qubit 74 is **"2".**

A theoretical analysis of how the control error is actually suppressed when the resource state generation process is performed under the above conditions will be described below.

Among the four patterns indicating the combinations of the rotation directions for the physical qubits, the "rotation direction pattern A" is that a rotation in the forward direction is set for both the two physical qubits 71 and 74. The "rotation direction pattern B" is that a rotation in the reverse direction is set for the physical qubit 71 and a rotation in the forward direction is set for the physical qubit 74. The "rotation direction pattern C" is that a rotation in the forward direction is set for the physical qubit 71 and a rotation in the reverse direction is set for the physical qubit 74. The "rotation direction pattern D" is that a rotation in the reverse direction is set for both the two physical qubits 71 and 74.

At this time, the number of inverse rotations is an odd number in the "rotation direction pattern B" and the "rotation direction pattern **C".** Therefore, correction using a logic X gate is performed. The logical rotation angle of the final output state after the correction in each rotation direction pattern is given as follows in the limit where O(θ⁴) is neglected. ${θ}_{∗ , A} ≃ {θ}^{2} + θ \left({f}_{1}+{f}_{2}\right) + {f}_{1} {f}_{2}$ ${θ}_{∗ , B} ≃ {θ}^{2} + θ \left(-{f}_{1}+{f}_{2}\right) - {f}_{1} {f}_{2}$ ${θ}_{∗ , C} ≃ {θ}^{2} + θ \left({f}_{1}-{f}_{2}\right) - {f}_{1} {f}_{2}$ ${θ}_{∗ , D} ≃ {θ}^{2} - θ \left({f}_{1}+{f}_{2}\right) + {f}_{1} {f}_{2}$

"θ_{*,A}" denotes the logical rotation angle of the "rotation direction pattern A", "θ_{*,B}" denotes the logical rotation angle of the "rotation direction pattern B", "θ_{*,c}" denotes the logical rotation angle of the "rotation direction pattern C", and "θ_{*,D}" denotes the logical rotation angle of the "rotation direction pattern D". "θ_{*} ≈ θ²" corresponds to an ideal angle with no error.

The effect of reducing control errors is obtained without applying the above condition 5 (the control error angle fᵢ does not depend on the physical rotation angle θ on the assumption that the virtual Z gate is used). That is, the control error angle fᵢ is considered to be expressed as a function "fᵢ = fᵢ(θ)" that depends on the physical rotation angle θ in a general situation. In particular, in a region where θ is small, the behavior is represented by the following Formula (6). ${f}_{i} = {f}_{i} \left(θ\right) = {c}_{i}^{\left(0\right)} + {c}_{i}^{\left(1\right)} θ + {c}_{i}^{\left(2\right)} {θ}^{2} + ⋯$

"cᵢ⁽⁰⁾, cᵢ⁽¹⁾, cᵢ⁽²⁾, · · ·" are real numbers indicating the coefficients of the respective terms. The first term "cᵢ⁽⁰⁾" on the right-hand side of Formula (6) represents a control error caused by the influence of the preceding and succeeding CNOT gates. In the case where the virtual Z gate is used, the first term on the right-hand side is dominant with respect to the control error angle fᵢ.

In the case where physical qubits are rotated through the gate operation of a typical Z gate without using the virtual Z gate, the control error angle fᵢ depends on θ. In the case where the value of θ is small, the second term "cᵢ⁽¹⁾θ" on the right-hand side of Formula (6) is dominant with respect to the control error angle fᵢ.

In particular, Formula (6) may be decomposed into an even function component and an odd function component with respect to θ. Formula (6) is decomposed as follows. ${f}_{i} = {f}_{i} \left(θ\right) = {f}_{i}^{even} \left(θ\right) + {f}_{i}^{odd} \left(θ\right)$ ${f}_{i}^{even} \left(θ\right) = {c}_{i}^{\left(0\right)} + {c}_{i}^{\left(2\right)} {θ}^{2} + ⋯$ ${f}_{i}^{odd} \left(θ\right) = {c}_{i}^{\left(1\right)} θ + {c}_{i}^{\left(3\right)} {θ}^{3} + ⋯$

"fᵢ^{even}(θ)" is an even function, and "fᵢ^{odd}(θ)" is an odd function. The even function component expressed by Formula (8) is finally canceled. On the other hand, the odd function component expressed by Formula (9) is not canceled. The "cᵢ⁽¹⁾θ" term is an odd function and is not canceled. However, by canceling the even function component, the effect of reducing control errors is obtained.

A rotation angle for a resource state with respect to a control error is calculated in more detail as follows.

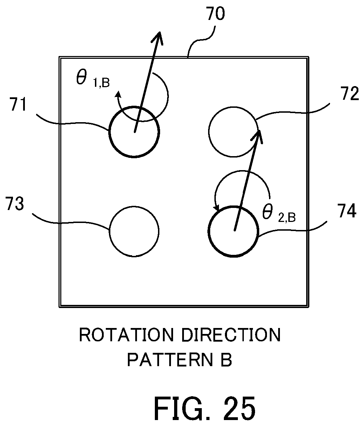

FIG. 25 illustrates an example of a specific rotation direction pattern. For example, focusing on the "rotation direction pattern B", a rotation error that occurs in a logical qubit in the case where the gate operation of a transversal rotation gate is performed according to the "rotation direction pattern B" will be considered. In the "rotation direction pattern B", a physical rotation angle including an error of the physical qubit 71 is taken as "θ_{1,B}", and a physical rotation angle including an error of the physical qubit 71 is taken as "θ_{2,B}". Since an inverse rotation is set for the physical qubit 71, "θ_{1,B}" is expressed by Formula (10). ${θ}_{1 , B} = - θ + {f}_{1} \left(-θ\right)$

Since a forward rotation is set for the physical qubit 74, "θ_{2,B}" is expressed by Formula (11). ${θ}_{2 , B} = θ + {f}_{2} \left(θ\right)$

On the basis of Formula (10) and Formula (11), the logical rotation angle " θ̃_{*}^{B}" of the resource state obtained after syndrome measurement in the case where the gate operation of the transversal rotation gate is performed according to the "rotation direction pattern B" is given by the following formula. $\begin{matrix}{{θ}^{˜}}_{∗}^{B} ≃ {θ}_{1 , B} {θ}_{2 , B} = \left(-θ+{f}_{1}\left(-θ\right)\right) \left(θ+{f}_{2}\left(θ\right)\right) \\ = - \left[{θ}^{2}+θ\left(-{f}_{1}\left(-θ\right)+{f}_{2}\left(θ\right)\right)-{f}_{1}\left(-θ\right){f}_{2}\left(θ\right)\right]\end{matrix}$

In the "rotation direction pattern B", the number of physical qubits to be subjected to the inverse rotation is an odd number. Therefore, a correction of the rotation direction is performed. When the correction of the rotation direction is reflected in the formula, the logical rotation angle "θ_{*}^{B}" is expressed by Formula (13). ${θ}_{∗}^{B} = - {{θ}^{˜}}_{∗}^{B} ≃ {θ}^{2} + θ \left(-{f}_{1}\left(-θ\right)+{f}_{2}\left(θ\right)\right) - {f}_{1} \left(-θ\right) {f}_{2} \left(θ\right)$

When the logical rotation angle for each of the "rotation direction pattern A", "rotation direction pattern C", and "rotation direction pattern D" is calculated in the same manner as in the "rotation direction pattern B", the logical rotation angles are respectively expressed by Formula (14), Formula (15), and Formula (16). ${θ}_{∗}^{A} ≃ {θ}^{2} + θ \left({f}_{1}\left(θ\right)+{f}_{2}\left(θ\right)\right) + {f}_{1} \left(θ\right) {f}_{2} \left(θ\right)$ ${θ}_{∗}^{C} ≃ {θ}^{2} + θ \left({f}_{1}\left(θ\right)-{f}_{2}\left(-θ\right)\right) - {f}_{1} \left(θ\right) {f}_{2} \left(-θ\right)$ ${θ}_{∗}^{D} ≃ {θ}^{2} + θ \left(-{f}_{1}\left(-θ\right)-{f}_{2}\left(-θ\right)\right) + {f}_{1} \left(-θ\right) {f}_{2} \left(-θ\right)$

The four rotation direction patterns for the physical qubits are randomly sampled with a probability of "1/4", and the gate operation of the transversal rotation gate is performed with each sampled rotation direction pattern. As a result, the gate operation "ε(ρ)" of the rotation gate for the logical qubit having a quantum state ρ is written as follows. $\begin{matrix}ε \left(ρ\right) = \frac{1}{4} {R}_{z} \left({θ}_{∗ , A}\right) {ρR}_{z}^{†} \left({θ}_{∗ , A}\right) + \frac{1}{4} {R}_{z} \left({θ}_{∗ , B}\right) {ρR}_{z}^{†} \left({θ}_{∗ , B}\right) \\ + \frac{1}{4} {R}_{z} \left({θ}_{∗ , C}\right) {ρR}_{z}^{†} \left({θ}_{∗ , C}\right) + \frac{1}{4} {R}_{z} \left({θ}_{∗ , D}\right) {ρR}_{z}^{†} \left({θ}_{∗ , D}\right) \\ = \frac{1}{4} {R}_{z} \left({δθ}_{∗ , A}\right) ρ ′ {R}_{z}^{†} \left({δθ}_{∗ , A}\right) + \frac{1}{4} {R}_{z} \left({δθ}_{∗ , B}\right) ρ ′ {R}_{z}^{†} \left({δθ}_{∗ , B}\right) \\ + \frac{1}{4} {R}_{z} \left({δθ}_{∗ , C}\right) ρ ′ {R}_{z}^{†} \left({δθ}_{∗ , C}\right) + \frac{1}{4} {R}_{z} \left({δθ}_{∗ , D}\right) ρ ′ {R}_{z}^{†} \left({δθ}_{∗ , D}\right)\end{matrix}$

Here, ρ' denotes an ideal output result without any errors and is expressed by Formula (18). $ρ ′ ≡ {R}_{z} \left({θ}_{∗}\right) {ρR}_{z}^{†} \left({θ}_{∗}\right)$

δθ_{*,α} denotes an error in the rotation angle of the output state and is expressed by Formula (19). ${δθ}_{∗ , α} ≡ {θ}_{∗ , α} - {θ}_{∗} ≃ {θ}_{∗ , α} - {θ}^{2} \left(α=A,B,C,D\right)$

Here, when φ << 1, the relationship of Formula (20) is established. ${R}_{z} \left(ϕ\right) ρ ′ {R}_{z} \left(ϕ\right) = {e}^{iϕ \hat{Z}} ρ ′ {e}^{- iϕ \hat{Z}} ≃ ρ ′ + iϕ \left(Zρ′-ρ′Z\right) + {ϕ}^{2} Zρ ′ Z$

By using the relationship of Formula (20), Formula (17) is transformed into Formula (21). $\begin{matrix}ε ′ \left(ρ\right) = {R}_{z} \left({θ}_{∗ , A}\right) {ρR}_{z}^{†} \left({δθ}_{∗ , A}\right) + \frac{1}{4} {R}_{z} \left({δθ}_{∗ , B}\right) ρ ′ {R}_{z}^{†} \left({δθ}_{∗ , B}\right) \\ + \frac{1}{4} {R}_{z} \left({δθ}_{∗ , C}\right) ρ ′ {R}_{z}^{†} \left({δθ}_{∗ , C}\right) + \frac{1}{4} {R}_{z} \left({δθ}_{∗ , D}\right) ρ ′ {R}_{z}^{†} \left({δθ}_{∗ , D}\right) \\ = ρ ′ + \frac{1}{4} \left({\sum }_{α = A , B , C , D} {δθ}_{∗ , α}\right) \left(Zρ′-ρ′Z\right) + \frac{1}{4} \left({\sum }_{α = A , B , C , D} {δθ}_{∗ , α}^{2}\right) Zρ ′ Z\end{matrix}$

Here, "Σ_{α=A,B,C,D}δθ_{*,α}" in parentheses in the second term on the right-hand side is decomposed into "δθ_{A} + δθ_{B} + δθ_{C} + δθ_{D}". As recognized from Formula (19), when θ << 1, "δθ_{*,α} ≈ θ_{*,α} - δ²". Then, based on Formulas (13) to (16), "Σ_{α=A,B,C,D}δθ_{*,α} = 0" is obtained. That is, "Σ_{α=A,B,C,D}δθ_{*,α}" in the first term on the right-hand side becomes "0" because the errors in the four types of rotational direction patterns cancel out each other. This is expressed by the following formula. ${\sum }_{α = A , B , C , D} {δθ}_{∗ , α} = 0$

Therefore, the first and third terms remain on the right-hand side of Formula (21). "δθ_{*,α}²" (α = A, B, C, D) in "Σ_{α=A,B,C,D}δθ_{*}²_{,α}" of the third term may be set to "δθ_{*,α}² ≈ θ_{*,α}² - θ⁴" on the basis of Formula (19). "θ_{*,α}²" is obtained by replacing the physical rotation angle "θ" or "-θ" in Formulas (13) to (16) with "θ²" or "(-θ)²". Then, Formula (21) is transformed into Formula (23). $ε \left(ρ\right) = ρ ′ + \left[{θ}^{2}\left({f}_{1}^{2}+{f}_{2}^{2}\right)+{\left({f}_{1}{f}_{2}\right)}^{2}\right] Zρ ′ Z$

The magnitude of an error occurring in the calculation of Formula (23) is a very small value compared to the magnitude O(θfᵢ) of an error that occurs in the case where physical qubits are always rotated in the same direction without introducing randomness. That is, the control error is suppressed.

For example, in the case where the rotation directions for the physical qubits in the gate operation of the transversal rotation gate are always the same directions, the gate operation of the rotation gate is represented by Formula (24). $ε ′ \left(ρ\right) = {R}_{z} \left({θ}_{∗ , A}\right) {ρR}_{z}^{†} \left({θ}_{∗ , A}\right) = ρ ′ + {iδθ}_{∗ , A} \left(Zρ′-ρ′Z\right) + {{δθ}_{∗ , A}}^{2} Zρ ′ Z$

The magnitude of the error in the output result obtained from Formula (24) is evaluated with the diamond distance, as represented by Formula (25). $D ′ ≡ \left‖ε′-{R}_{{θ}_{∗}}\right‖ ≃ \left|{δθ}_{∗ , A}\right| ≃ \left|θ\left({f}_{1}+{f}_{2}\right)\right| + O \left({f}^{2}\right)$

By contrast, in the case where the randomness is introduced and the rotation directions for the physical qubits in the gate operation of the transversal rotation gate are determined based on random numbers, the magnitude of the error in the output result obtained from Formula (23) is evaluated with the diamond distance, as represented by Formula (26). $D ≡ \left‖ε-{R}_{θ}\right‖ ≃ \left[{θ}^{2}\left({f}_{1}^{2}+{f}_{2}^{2}\right)+{\left({f}_{1}{f}_{2}\right)}^{2}\right]$

Since a situation of "fᵢ << θ << 1" is considered as the setting, D << D' is obtained. Thus, it is seen that an error that occurs at the time of generating a resource state is significantly reduced by determining the rotation directions for the physical qubits in the gate operation of the transversal rotation gate on the basis of the random numbers.

In the second embodiment, it is possible to generate a resource state for a phase rotation gate particularly for an infinitesimal rotation with higher accuracy against control errors. As a **result,** for example, the estimation accuracy in quantum computations for eigenvalues or the like obtained from a quantum algorithm is significantly improved.

Although the embodiments have been illustrated above, the configuration of each unit described in the embodiments may be replaced with another configuration having the same function. Any other components or steps may be added. Furthermore, any two or more configurations (features) of the above-described embodiments may be combined.

In one aspect, the accuracy of generating a resource state is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A computer program that, when executed by a computer, causes the computer to perform a process of preparing a resource state comprising:
determining, based on a logical rotation angle by which a state of a logical qubit (2) is to be rotated around a predetermined axis, a physical rotation angle around the predetermined axis to be applied to at least a plurality of first physical qubits (4a, 4b, 4c) among a plurality of physical qubits (3) constituting the logical qubit (2);
randomly determining a rotation direction for each of the plurality of first physical qubits to be either a forward direction or a reverse direction;
causing a quantum computer (1) comprising the plurality of physical qubits (3) to rotate each of the plurality of first physical qubits (4a, 4b, 4c) around the predetermined axis by the physical rotation angle in the determined rotation direction;
upon determining that a number of physical qubits rotated in the reverse direction among the plurality of first physical qubits is an odd number, causing the quantum computer (1) to perform a logical gate operation on the logical qubit (2), the logical gate operation being to correct a rotation direction;
causing, upon determining that the number of physical qubits rotated in the reverse direction among the plurality of first physical qubits is an even number, the
quantum computer (1) to execute a gate teleportation circuit using, as the resource state, a state of the logical qubit (2) after the rotating around the predetermined axis by the physical rotation angle; and
causing, upon determining that the number of physical qubits rotated in the reverse direction among the plurality of first physical qubits is the odd number, the quantum computer (1) to execute the gate teleportation circuit using, as the resource state, a state of the logical qubit (2) after the performing of the logical gate operation on the logical qubit (2).

2. The computer program according to claim 1, wherein performing of the logical gate operation on the logical qubit (2), includes applying a logical X operator to the logical qubit (2).

3. The computer program according to claim 1 or 2, wherein rotating around the predetermined axis by the physical rotation angle includes changing a state of each of the plurality of first physical qubits (4a, 4b, 4c) to a state rotated around a Z axis by the physical rotation angle via a virtual Z gate.

4. The computer program according to any of the preceding claims, wherein rotating around the predetermined axis by the physical rotation angle includes causing the quantum computer (1) to perform a gate operation of an n-qubit rotation gate on n physical qubits among the plurality of first physical qubits, the n being an integer of 2 or more.

5. A quantum computation control method executed by a computer, the method comprising:
determining, based on a logical rotation angle by which a state of a logical qubit (2) is to be rotated around a predetermined axis, a physical rotation angle around the predetermined axis to be applied to at least a plurality of first physical qubits (4a, 4b, 4c) among a plurality of physical qubits (3) constituting the logical qubit (2);
randomly determining a rotation direction for each of the plurality of first physical qubits to be either a forward direction or a reverse direction;
causing a quantum computer (1) comprising the plurality of physical qubits (3) to rotate each of the plurality of first physical qubits (4a, 4b, 4c) around the predetermined axis by the physical rotation angle in the determined rotation direction;
upon determining that a number of physical qubits rotated in the reverse direction among the plurality of first physical qubits is an odd number, causing the quantum computer (1) to perform a logical gate operation on the logical qubit (2), the logical gate operation being to correct a rotation direction;
causing, upon determining that the number of physical qubits rotated in the reverse direction among the plurality of first physical qubits is an even number, the quantum computer (1) to execute a gate teleportation circuit using, as the resource state, a state of the logical qubit (2) after the rotating around the predetermined axis by the physical rotation angle; and
causing, upon determining that the number of physical qubits rotated in the reverse direction among the plurality of first physical qubits is the odd number, the quantum computer (1) to execute the gate teleportation circuit using, as the resource state, a state of the logical qubit (2) after the performing of the logical gate operation on the logical qubit (2).

6. An information processing apparatus comprising: processing means for
determining, based on a logical rotation angle by which a state of a logical qubit (2) is rotated around a predetermined axis, a physical rotation angle around the predetermined axis to be applied to at least a plurality of first physical qubits (4a, 4b, 4c) among a plurality of physical qubits (3) constituting the logical qubit (2),
randomly determining a rotation direction for each of the plurality of first physical qubits to be either a forward direction or a reverse direction,
causing a quantum computer (1) comprising the plurality of physical qubits (3) to rotate each of the plurality of first physical qubits (4a, 4b, 4c) around the predetermined axis by the physical rotation angle in the determined rotation direction,
upon determining that a number of physical qubits rotated in the reverse direction among the plurality of first physical qubits is an odd number, causing the quantum computer (1) to perform a logical gate operation on the logical qubit (2), the logical gate operation being to correct a rotation direction;
causing, upon determining that the number of physical qubits rotated in the reverse direction among the plurality of first physical qubits is an even number, the quantum computer (1) to execute a gate teleportation circuit using, as the resource state, a state of the logical qubit (2) after the rotating around the predetermined axis by the physical rotation angle; and
causing, upon determining that the number of physical qubits rotated in the reverse direction among the plurality of first physical qubits is the odd number, the quantum computer (1) to execute the gate teleportation circuit using, as the resource state, a state of the logical qubit (2) after the performing of the logical gate operation on the logical qubit (2).

## Patentansprüche

1. Computerprogramm, das, wenn es durch einen Computer ausgeführt wird, bewirkt, dass der Computer einen Vorgang zum Vorbereiten eines Ressourcenzustands durchführt, der Folgendes umfasst:
Bestimmen, basierend auf einem logischen Drehwinkel, um den ein Zustand eines logischen Qubits (2) um eine vorbestimmte Achse herum gedreht werden soll, eines physikalischen Drehwinkels um die vorbestimmte Achse herum, der auf mindestens eine Vielzahl von ersten physikalischen Qubits (4a, 4b, 4c) unter einer Vielzahl von physikalischen Qubits (3), die das logische Qubit (2) darstellen, angewendet werden soll;
zufälliges Bestimmen einer Drehrichtung für jedes der Vielzahl von ersten physikalischen Qubits als entweder Vorwärtsrichtung oder Rückwärtsrichtung;
Bewirken, dass ein Quantencomputer (1), der die Vielzahl von physikalischen Qubits (3) umfasst, jedes der Vielzahl von ersten physikalischen Qubits (4a, 4b, 4c) um den physikalischen Drehwinkel in der vorbestimmten Drehrichtung um die vorbestimmte Achse herum dreht;
bei Bestimmen, dass eine Zahl von in die Rückwärtsrichtung gedrehten physikalischen Qubits unter der Vielzahl von ersten physikalischen Qubits eine ungerade Zahl ist, Bewirken, dass der Quantencomputer (1) eine logische Gatteroperation an dem logischen Qubit (2) durchführt, wobei die logische Gatteroperation darin besteht, eine Drehrichtung zu korrigieren;
bei Bestimmen, dass die Zahl von in die Rückwärtsrichtung gedrehten physikalischen Qubits unter der Vielzahl von ersten physikalischen Qubits eine gerade Zahl ist, Bewirken, dass der Quantencomputer (1) nach dem Drehen um den physikalischen Drehwinkel um die vorbestimmte Achse herum eine Gatterteleportationsschaltung unter Verwenden eines Zustands des logischen Qubits (2) als Ressourcenzustand ausführt; und
bei Bestimmen, dass die Zahl von in die Rückwärtsrichtung gedrehten physikalischen Qubits unter der Vielzahl von ersten physikalischen Qubits die ungerade Zahl ist, Bewirken, dass der Quantencomputer (1) nach dem Durchführen der logischen Gatteroperation an dem logischen Qubit (2) die Gatterteleportationsschaltung unter Verwenden eines Zustands des logischen Qubits (2) als Ressourcenzustand ausführt.

2. Computerprogramm nach Anspruch 1, wobei das Durchführen der logischen Gatteroperation an dem logischen Qubit (2) ein Anwenden eines logischen X-Operators auf das logische Qubit (2) beinhaltet.

3. Computerprogramm nach Anspruch 1 oder 2, wobei das Drehen um den physikalischen Drehwinkel um die vorbestimmte Achse herum ein Ändern eines Zustands jedes der Vielzahl von ersten physikalischen Qubits (4a, 4b, 4c) in einen um den physikalischen Drehwinkel um eine Z-Achse herum über ein virtuelles Z-Gatter gedrehten Zustand beinhaltet.

4. Computerprogramm nach einem der vorhergehenden Ansprüche, wobei das Drehen um den physikalischen Drehwinkel um die vorbestimmte Achse herum ein Bewirken, dass der Quantencomputer (1) eine Gatteroperation eines n-Qubit-Drehgatters an n physikalischen Qubits unter der Vielzahl von ersten physikalischen Qubits durchführt, beinhaltet, wobei n eine ganze Zahl von 2 oder mehr ist.

5. Quantenberechnungssteuerverfahren, ausgeführt durch einen Computer, wobei das Verfahren Folgendes umfasst:
Bestimmen, basierend auf einem logischen Drehwinkel, um den ein Zustand eines logischen Qubits (2) um eine vorbestimmte Achse herum gedreht werden soll, eines physikalischen Drehwinkels um die vorbestimmte Achse herum, der auf mindestens eine Vielzahl von ersten physikalischen Qubits (4a, 4b, 4c) unter einer Vielzahl von physikalischen Qubits (3), die das logische Qubit (2) darstellen, angewendet werden soll;
zufälliges Bestimmen einer Drehrichtung für jedes der Vielzahl von ersten physikalischen Qubits als entweder Vorwärtsrichtung oder Rückwärtsrichtung;
Bewirken, dass ein Quantencomputer (1), der die Vielzahl von physikalischen Qubits (3) umfasst, jedes der Vielzahl von ersten physikalischen Qubits (4a, 4b, 4c) um den physikalischen Drehwinkel in der vorbestimmten Drehrichtung um die vorbestimmte Achse herum dreht;
bei Bestimmen, dass eine Zahl von in die Rückwärtsrichtung gedrehten physikalischen Qubits unter der Vielzahl von ersten physikalischen Qubits eine ungerade Zahl ist, Bewirken, dass der Quantencomputer (1) eine logische Gatteroperation an dem logischen Qubit (2) durchführt, wobei die logische Gatteroperation darin besteht, eine Drehrichtung zu korrigieren;
bei Bestimmen, dass die Zahl von in die Rückwärtsrichtung gedrehten physikalischen Qubits unter der Vielzahl von ersten physikalischen Qubits eine gerade Zahl ist, Bewirken, dass der Quantencomputer (1) nach dem Drehen um den physikalischen Drehwinkel um die vorbestimmte Achse herum eine Gatterteleportationsschaltung unter Verwenden eines Zustands des logischen Qubits (2) als Ressourcenzustand ausführt; und
bei Bestimmen, dass die Zahl von in die Rückwärtsrichtung gedrehten physikalischen Qubits unter der Vielzahl von ersten physikalischen Qubits die ungerade Zahl ist, Bewirken, dass der Quantencomputer (1) nach dem Durchführen der logischen Gatteroperation an dem logischen Qubit (2) die Gatterteleportationsschaltung unter Verwenden eines Zustands des logischen Qubits (2) als Ressourcenzustand ausführt.

6. Informationsverarbeitungsvorrichtung, umfassend:
Verarbeitungsmittel zum
Bestimmen, basierend auf einem logischen Drehwinkel, um den ein Zustand eines logischen Qubits (2) um eine vorbestimmte Achse herum gedreht ist, eines physikalischen Drehwinkels um die vorbestimmte Achse herum, der auf mindestens eine Vielzahl von ersten physikalischen Qubits (4a, 4b, 4c) unter einer Vielzahl von physikalischen Qubits (3), die das logische Qubit (2) darstellen, angewendet werden soll,
zufälligen Bestimmen einer Drehrichtung für jedes der Vielzahl von ersten physikalischen Qubits als entweder Vorwärtsrichtung oder Rückwärtsrichtung,
Bewirken, dass ein Quantencomputer (1), der die Vielzahl von physikalischen Qubits (3) umfasst, jedes der Vielzahl von ersten physikalischen Qubits (4a, 4b, 4c) um den physikalischen Drehwinkel in der vorbestimmten Drehrichtung um die vorbestimmte Achse herum dreht,
bei Bestimmen, dass eine Zahl von in die Rückwärtsrichtung gedrehten physikalischen Qubits unter der Vielzahl von ersten physikalischen Qubits eine ungerade Zahl ist, Bewirken, dass der Quantencomputer (1) eine logische Gatteroperation an dem logischen Qubit (2) durchführt, wobei die logische Gatteroperation darin besteht, eine Drehrichtung zu korrigieren;
bei Bestimmen, dass die Zahl von in die Rückwärtsrichtung gedrehten physikalischen Qubits unter der Vielzahl von ersten physikalischen Qubits eine gerade Zahl ist, Bewirken, dass der Quantencomputer (1) nach dem Drehen um den physikalischen Drehwinkel um die vorbestimmte Achse herum eine Gatterteleportationsschaltung unter Verwenden eines Zustands des logischen Qubits (2) als Ressourcenzustand ausführt; und
bei Bestimmen, dass die Zahl von in die Rückwärtsrichtung gedrehten physikalischen Qubits unter der Vielzahl von ersten physikalischen Qubits die ungerade Zahl ist, Bewirken, dass der Quantencomputer (1) nach dem Durchführen der logischen Gatteroperation an dem logischen Qubit (2) die Gatterteleportationsschaltung unter Verwenden eines Zustands des logischen Qubits (2) als Ressourcenzustand ausführt.

## Revendications

1. Programme informatique qui, lorsqu'il est exécuté par un ordinateur, amène l'ordinateur à réaliser un processus de préparation d'un état de ressource comprenant :
la détermination, sur la base d'un angle de rotation logique selon lequel un état d'un qubit logique (2) doit subir une rotation autour d'un axe prédéterminé, d'un angle de rotation physique autour de l'axe prédéterminé à appliquer à au moins une pluralité de premiers qubits physiques (4a, 4b, 4c) parmi une pluralité de qubits physiques (3) constituant le qubit logique (2) ;
la détermination aléatoire d'un sens de rotation pour chacun de la pluralité de premiers qubits physiques, qui est soit le sens avant, soit le sens inverse ;
le fait d'amener un ordinateur quantique (1) comprenant la pluralité de qubits physiques (3) à faire tourner chacun de la pluralité de premiers qubits physiques (4a, 4b, 4c) autour de l'axe prédéterminé selon l'angle de rotation physique dans le sens de rotation déterminé ;
lorsqu'il est déterminé qu'un certain nombre de qubits physiques subissant une rotation dans le sens inverse parmi la pluralité des premiers qubits physiques est un nombre impair, le fait d'amener l'ordinateur quantique (1) à réaliser une opération de porte logique sur le qubit logique (2), l'opération de porte logique consistant à corriger un sens de rotation ;
le fait d'amener, lorsqu'il est déterminé que le nombre de qubits physiques subissant une rotation dans le sens inverse parmi la pluralité de premiers qubits physiques est pair, l'ordinateur quantique (1) à exécuter un circuit de téléportation de porte en utilisant, comme état de ressource, un état du qubit logique (2) après la rotation autour de l'axe prédéterminé selon l'angle de rotation physique ; et
le fait d'amener, lorsqu'il est déterminé que le nombre de qubits physiques subissant une rotation dans le sens inverse parmi la pluralité de premiers qubits physiques est un nombre impair, l'ordinateur quantique (1) à exécuter le circuit de téléportation de porte en utilisant, comme état de ressource, un état du qubit logique (2) après la réalisation de l'opération de porte logique sur le qubit logique (2).

2. Programme informatique selon la revendication 1, dans lequel la réalisation de l'opération de porte logique sur le qubit logique (2) comporte l'application d'un opérateur logique X au qubit logique (2).

3. Programme informatique selon la revendication 1 ou 2, dans lequel la rotation autour de l'axe prédéterminé selon l'angle de rotation physique comporte le changement d'état de chacun de la pluralité de premiers qubits physiques (4a, 4b, 4c) vers un état subissant une rotation autour d'un axe Z selon l'angle de rotation physique via une porte Z virtuelle.

4. Programme informatique selon l'une quelconque des revendications précédentes, dans lequel la rotation autour de l'axe prédéterminé selon l'angle de rotation physique comporte le fait d'amener l'ordinateur quantique (1) à réaliser une opération de porte d'une porte de rotation à n qubits sur n qubits physiques parmi la pluralité de premiers qubits physiques, n étant un entier supérieur ou égal à 2.

5. Procédé de commande de calcul quantique exécuté par un ordinateur, le procédé comprenant :
la détermination, sur la base d'un angle de rotation logique selon lequel un état d'un qubit logique (2) doit subir une rotation autour d'un axe prédéterminé, d'un angle de rotation physique autour de l'axe prédéterminé à appliquer à au moins une pluralité de premiers qubits physiques (4a, 4b, 4c) parmi une pluralité de qubits physiques (3) constituant le qubit logique (2) ;
la détermination aléatoire d'un sens de rotation pour chacun de la pluralité de premiers qubits physiques, qui est soit le sens avant, soit le sens inverse ;
le fait d'amener un ordinateur quantique (1) comprenant la pluralité de qubits physiques (3) à faire tourner chacun de la pluralité de premiers qubits physiques (4a, 4b, 4c) autour de l'axe prédéterminé selon l'angle de rotation physique dans le sens de rotation déterminé ;
lorsqu'il est déterminé qu'un certain nombre de qubits physiques subissant une rotation dans le sens inverse parmi la pluralité des premiers qubits physiques est un nombre impair, le fait d'amener l'ordinateur quantique (1) à réaliser une opération de porte logique sur le qubit logique (2), l'opération de porte logique consistant à corriger un sens de rotation ;
le fait d'amener, lorsqu'il est déterminé que le nombre de qubits physiques subissant une rotation dans le sens inverse parmi la pluralité de premiers qubits physiques est pair, l'ordinateur quantique (1) à exécuter un circuit de téléportation de porte en utilisant, comme état de ressource, un état du qubit logique (2) après la rotation autour de l'axe prédéterminé selon l'angle de rotation physique ; et
le fait d'amener, lorsqu'il est déterminé que le nombre de qubits physiques subissant une rotation dans le sens inverse parmi la pluralité de premiers qubits physiques est un nombre impair, l'ordinateur quantique (1) à exécuter le circuit de téléportation de porte en utilisant, comme état de ressource, un état du qubit logique (2) après la réalisation de l'opération de porte logique sur le qubit logique (2).

6. Appareil de traitement d'informations comprenant :
un moyen de traitement destiné à
la détermination, sur la base d'un angle de rotation logique selon lequel un état d'un qubit logique (2) subit une rotation autour d'un axe prédéterminé, d'un angle de rotation physique autour de l'axe prédéterminé à appliquer à au moins une pluralité de premiers qubits physiques (4a, 4b, 4c) parmi une pluralité de qubits physiques (3) constituant le qubit logique (2),
la détermination aléatoire d'un sens de rotation pour chacun de la pluralité de premiers qubits physiques, qui est soit le sens avant, soit le sens inverse,
amener un ordinateur quantique (1) comprenant la pluralité de qubits physiques (3) à faire tourner chacun de la pluralité de premiers qubits physiques (4a, 4b, 4c) autour de l'axe prédéterminé selon l'angle de rotation physique dans le sens de rotation déterminé,
lorsqu'il est déterminé qu'un certain nombre de qubits physiques subissant une rotation dans le sens inverse parmi la pluralité des premiers qubits physiques est un nombre impair, amener l'ordinateur quantique (1) à réaliser une opération de porte logique sur le qubit logique (2), l'opération de porte logique consistant à corriger un sens de rotation ;
amener, lorsqu'il est déterminé que le nombre de qubits physiques subissant une rotation dans le sens inverse parmi la pluralité de premiers qubits physiques est pair, l'ordinateur quantique (1) à exécuter un circuit de téléportation de porte en utilisant, comme état de ressource, un état du qubit logique (2) après la rotation autour de l'axe prédéterminé selon l'angle de rotation physique ; et
amener, lorsqu'il est déterminé que le nombre de qubits physiques subissant une rotation dans le sens inverse parmi la pluralité de premiers qubits physiques est un nombre impair, l'ordinateur quantique (1) à exécuter le circuit de téléportation de porte en utilisant, comme état de ressource, un état du qubit logique (2) après la réalisation de l'opération de porte logique sur le qubit logique (2).
